(19) Europäisches Patentamt
European Patent Office
Office européen des brevets

(11) **EP 3 630 528 B1**

(12) **EUROPÄISCHE PATENTSCHRIFT**

(45) Veröffentlichungstag und Bekanntmachung des Hinweises auf die Patenterteilung:
**20.09.2023 Patentblatt 2023/38**

(21) Anmeldenummer: **18725819.9**

(22) Anmeldetag: **17.05.2018**

(51) Internationale Patentklassifikation (IPC):
*B60L 15/20* (2006.01)    *B60W 20/20* (2016.01)
*B60L 50/16* (2019.01)    *B60L 50/61* (2019.01)
*B60K 6/387* (2007.10)    *B60K 6/442* (2007.10)
*B60W 10/02* (2006.01)    *B60W 10/06* (2006.01)
*B60W 10/08* (2006.01)    *B60W 10/26* (2006.01)
*B60W 20/12* (2016.01)

(52) Gemeinsame Patentklassifikation (CPC):
**B60L 15/2045; B60K 6/387; B60K 6/442;**
**B60L 50/16; B60L 50/61; B60W 10/02;**
**B60W 10/06; B60W 10/08; B60W 10/26;**
**B60W 20/12; B60W 20/20;** B60W 2556/50;
B60W 2710/248; Y02T 10/62; Y02T 10/64; (Forts.)

(86) Internationale Anmeldenummer:
**PCT/EP2018/062833**

(87) Internationale Veröffentlichungsnummer:
**WO 2018/215273 (29.11.2018 Gazette 2018/48)**

(54) **VERFAHREN ZUM STEUERN EINER ANTRIEBSEINRICHTUNG EINES HYBRIDFAHRZEUGES UND HYBRIDFAHRZEUG**

METHOD FOR CONTROLLING A DRIVE DEVICE OF A HYBRID VEHICLE AND HYBRID VEHICLE

PROCÉDÉ DE COMMANDE D'UN DISPOSITIF D'ENTRAÎNEMENT D'UN VÉHICULE HYBRIDE ET VÉHICULE HYBRIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2017 DE 102017208656**

(43) Veröffentlichungstag der Anmeldung:
**08.04.2020 Patentblatt 2020/15**

(73) Patentinhaber: **Volkswagen Aktiengesellschaft 38440 Wolfsburg (DE)**

(72) Erfinder:
• **HAMANN, Harry 38106 Braunschweig (DE)**
• **MÜNNING, Daniel 38118 Braunschweig (DE)**

(56) Entgegenhaltungen:
**EP-A1- 3 106 362    DE-A1-102015 222 691**

• **HARRY HAMANN ET AL: "Development of an Energy Management Strategy for a Series-Parallel Hybrid Electric Vehicle", 12TH SYMPOSIUM HYBRID AND ELECTRIC VEHICLES, 24. Februar 2015 (2015-02-24), Seiten 261-291, XP055500171, Braunschweig ISBN: 978-3-937655-35-2**
• **CHI-KIN CHAU ET AL: "Drive Mode Optimization and Path Planning for Plug-in Hybrid Electric Vehicles", ARXIV.ORG, CORNELL UNIVERSITY LIBRARY, 201 OLIN LIBRARY CORNELL UNIVERSITY ITHACA, NY 14853, 2. November 2016 (2016-11-02), XP080729152, DOI: 10.1109/TITS.2017.2691606**

**(Forts. nächste Seite)**

(52) Gemeinsame Patentklassifikation (CPC): (Forts.)
Y02T 10/70; Y02T 10/7072; Y02T 10/72;
Y02T 10/84

**Beschreibung**

Die Erfindung betrifft ein Verfahren zum Steuern einer Antriebseinrichtung eines Hybridfahrzeuges und ein Hybridfahrzeug.

Hybridfahrzeuge umfassen normalerweise mehrere Antriebskomponenten: Einen Verbrennungsmotor (auch Verbrennungskraftmaschine oder kurz VKM), einen oder mehrere elektrische Maschinen, die motorisch und/oder generatorisch betreibbar sind, ein Spannungsnetz höherer Spannung (auch Hochspannungsnetz oder Traktionsnetz mit einer Spannung von z. B. 48 V), welches über Wechselrichter und ggf. Spannungswandler mit den elektrischen Maschinen gekoppelt ist, eine mit dem Hochspannungsnetz gekoppelte Hochvoltbatterie, sowie ein über einen weiteren Spannungswandler mit dem Hochspannungsnetz gekoppeltes Niederspannungsnetz (auch Bordnetz mit einer Spannung von z. B. 12 V) mit einer Bordnetzbatterie zur Versorgung anderer elektrischer Verbraucher.

Verbrennungsmotor und elektrische Maschinen sind mechanisch über feste, schaltbare oder variable Getriebe miteinander gekoppelt. Der Antriebsstrang ist an seiner Abtriebsseite über ein Differenzialgetriebe und Seitenwellen mit den Antriebsrädern des Fahrzeugs verbunden und auf der Antriebsseite über ein Getriebe (einstufig, mehrstufig, schaltbar oder variabel) mit den Antriebsaggregaten Verbrennungsmotor und/oder Elektromaschinen. Optional sind zwischen dem Antriebsstrang und den Antriebsaggregaten Trenn- bzw. Schaltkupplungen vorgesehen, welche die Aggregate untereinander bzw. mit dem Antriebsstrang mechanisch koppeln oder von entkoppeln.

Es gibt unterschiedliche Hybridantriebskonzepte. Bei einem seriellen Hybridantrieb wird die mechanische Energie des Verbrennungsmotors über eine elektrische Maschine (Generator) in elektrische Energie umgewandelt. Diese elektrische Energie dient zum Antrieb einer zweiten elektrischen Maschine (Elektromotor), die den Antrieb des Fahrzeugs vornimmt. Die vom Generator erzeugte elektrische Energie kann auch zur Speisung eines Energiespeichers im Traktionsnetz dienen. Als Energiespeicher dienen in der Regel elektrochemische Speicher (Batterien). Verbrennungsmotor und zweite elektrische Maschine (Elektromotor) sind mechanisch entkoppelt.

Bei einem parallelen Hybrid sind der Verbrennungsmotor und eine elektrische Maschine entlang des Antriebsstrangs (mechanisch) gekoppelt. Bei einer sogenannten P1-Hybridstruktur sind Verbrennungsmotor und Elektromaschine immer mechanisch miteinander gekoppelt und ggf. gemeinsam über eine Trennkupplung mit dem Antriebsstrang koppelbar. Bei einer P2-Hybridstruktur ist zwischen Verbrennungsmotor und Elektromaschine eine Trennkupplung vorgesehen, die einen Rekuperationsbetrieb bei abgekoppeltem Verbrennungsmotor ermöglicht.

Der grundsätzliche Vorteil von Hybridantrieben besteht darin, dass die Verbrennungskraftmaschine durch den zusätzlich verfügbaren elektrischen Antrieb entweder so entlastet wird, dass der Verbrennungsmotor in verbrauchsarmen Betriebszuständen betrieben werden kann, oder dass der verbrennungsmotorische Antrieb zeitweise vollständig durch einen elektromotorischen Betrieb ersetzt wird. Weiter kann beim Bremsen durch den generatorischen Betrieb der Elektromaschine (Rekuperation) ein Teil der Bremsenergie in die Traktionsbatterie eingespeist werden, die dann wieder für elektrisches Fahren zur Verfügung steht. Dadurch können der Kraftstoffverbrauch und die unmittelbar mit dem Kraftstoffverbrauch zusammenhängenden Emissionen erheblich gesenkt werden.

Zum optimalen Einsatz der unterschiedlichen Antriebskomponenten ist zum einen eine komplexe mechanische Struktur erforderlich, um die Leistungsverteilung auf den Antriebsstrang vornehmen zu können (mehrere Antriebs- und Abtriebsstränge sowie Getriebestufen und Kupplungen), zum anderen ist aber auch eine aufwendige elektrische Vernetzung erforderlich, um die unterschiedlichen motorischen und generatorischen Betriebszustände der Elektromaschine(n) zu handhaben. Um die Möglichkeiten des Hybridantriebes wirksam ausschöpfen zu können, gibt es Betriebsstrategien, welche das Energie- und Leistungsmanagement zwischen den einzelnen Antriebskomponenten elektrisch und mechanisch über eine Steuerung, die üblicherweise in einem Motorsteuergerät realisiert ist, übernimmt.

Die Kombination von Verbrennungs- und elektrischer Maschine (oder mehrerer elektrischer Maschinen) erlaubt prinzipiell drei Möglichkeiten, das Fahrzeug anzutreiben:

- reiner verbrennungsmotorischer Betrieb,
- reiner elektrischer Betrieb oder
- ein Misch- bzw. Hybridbetrieb, bei dem sowohl Elektromaschine(n) und Verbrennungsmotor beteiligt sind.

Neben den reinen seriellen und parallelen Hybridkonzepten gibt es zunehmend auch seriellparallele Hybridantriebe, bei denen die folgenden Fahr- und/oder Betriebsmodi dargestellt werden können:

- elektrisches Fahren (im Antriebsmodus) und rekuperierendes Fahren (im Verzögerungsmodus). In diesem Fahrzustand steht der Verbrennungsmotor normalerweise still bzw. ist vom Antriebsstrang über die geöffnete Trennkupplung abgekoppelt. Die Antriebs- oder Radleistung wird von der oder den elektrischen Maschinen bereitgestellt. Die dazu erforderliche Antriebsenergie wird aus der Batterie bezogen. In Verzögerungsphasen treiben die Antriebsräder die elektrische Maschine an, die dann generatorisch arbeitet und die so aus der Bremsenergie erzeugte elektrische Energie zum Laden der Batterie abgibt.

- Beim sogenannten seriellen verbrennungsmotorischen Fahren (serieller Betriebsmodus) wird die eigentliche Antriebs- oder Radleistung über die elektrische Maschine bereitgestellt. Die dazu erforderliche elektrische Energie wird von der Einheit Verbrennungsmotor/elektrischer Generator (zweite elektrische Maschine) bei geöffneter Trennkupplung zum Antriebsstrang erzeugt. Dabei werden die Betriebspunkte/Betriebszustände des Verbrennungsmotors möglichst entlang dem Verlauf des optimalen kombinierten Wirkungsgrads aus Verbrennungsmotor und Generator eingestellt. In diesem Betriebszustand dient die erzeugte elektrische Energie (aus dem Generator) allein der Versorgung der antreibenden Elektromaschine.

  Optional kann in diesem Betriebszustand die Leistung des Verbrennungsmotors erhöht werden (durch eine Lastpunktverschiebung, bei der Drehmoment und/oder Drehzahl erhöht wird), um zusätzliche Energie zum Laden der Batterie zu erzeugen. Auch hier erfolgt die Leistungskurve entlang des Verlaufs der optimalen kombinierten Wirkungsgrade von Verbrennungsmotor und Generator. In diesem Betriebsmodus (serielles verbrennungsmotorisches Fahren mit Batterieladung) erzeugt die Einheit Verbrennungsmotor/elektrischer Generator (elektrische Maschine) mehr elektrische Energie, als zur Deckung der Radleistung erforderlich ist.

- Beim parallelen verbrennungsmotorischen Fahren (paralleler Betriebsmodus) deckt der Verbrennungsmotor die gewünschte bzw. erforderliche Radleistung und stellt die dazu erforderliche Antriebsleistung bei geschlossener Trennkupplung über den Antriebsstrang zur Verfügung. Über ein Schaltgetriebe bzw. ein variables Getriebe und Kupplungen kann hier der vollständige Geschwindigkeitsbereich einschließlich der Anfahrvorgängen durch den Verbrennungsmotor abgedeckt werden. Ist der Verbrennungsmotor mit einer festen Getriebeübersetzung mit dem Antriebsstrang bzw. den Rädern gekoppelt, so wird der parallele Betriebsmodus nur in einem bestimmten Drehzahlbereich des Verbrennungsmotors gewählt - z. B. wenn mindestens die Leerlaufdrehzahl des Verbrennungsmotors erreicht ist. Der in diesem Betriebsmodus abzudeckende Fahrgeschwindigkeitsbereich hängt dann weiter von der Getriebeübersetzung zwischen Verbrennungsmotor und Antriebsrädern sowie vom Drehmoment- bzw. Drehzahlspektrum des Verbrennungsmotors ab.

  Auch im parallelen Modus kann über eine Lastpunktverschiebung des Verbrennungsmotors eine zusätzliche Leistungsabgabe an den gekoppelten Generator realisiert werden, um die Batterie auf- bzw. nachzuladen. Bei konstanter Drehzahl (die sich nach dem gewünschten Fahrzustand des Fahrzeugs richtet) erfolgt diese Lastpunktverschiebung bzw. Lastpunktanhebung über eine Verschiebung des Drehmoments, die dann ebenfalls genutzt wird, um die zusätzlich erzeugte elektrische Energie zum Laden der Batterie zu nutzen.

Zur Steuerung der einzelnen Betriebsmodi, zur Entscheidung über den Wechsel zwischen einzelnen Betriebsmodi (beim hier vorgestellten seriell-parallelen Hybridkonzept insgesamt 6) und auch für optimierte Nachladestrategien ist eine komplexe Betriebsstrategie erforderlich, um einen effizienzoptimierten Betrieb zu realisieren.

Beispielsweise weist ein in der DE 10 2015 222 691 A1 offenbartes Verfahren zum Steuern einer Antriebseinrichtung eines Hybridfahrzeugs bei einem aus einem leistungsorientierten Modus und einem verbrauchsorientierten Modus ausgewählten verbrauchsorientierten Modus auf: Steuern der Antriebseinrichtung in einem parallelen Boost-Hybridantrieb und Wechseln in einen seriellen Hybridantrieb, falls ein Kriterium erfüllt ist.

Beispielsweise offenbart der Aufsatz "Drive Mode optimization and Path Planning for Plug-in Hybrid Electric Vehicles" von Chi-Kin Chau et al. (ARXIV.ORG, Cornell University Library, 201 OLIN LIBRARY CORNELL UNIVERSITY ITHACA, NY 14853, 2. November 2016, XP080729152, DOI: 10.1109/TITS.2017.2691606) mittels einer Optimierung für ein seriell-paralleles Hybridkonzept einen der Fahrmodi elektrisches Fahren, verbrennungsmotorisches Fahren mit Batterieaufladen, und aggregiertes Fahren anhand des Kraftstoffverbrauchs auszuwählen.

Eine mögliche Betriebsstrategie kann darin bestehen, dass man den Wechsel zwischen elektrischem Fahren, seriellem verbrennungsmotorischem Fahren und parallelem verbrennungsmotorischem Fahren über feste einprogrammierte Antriebsleistungsgrenzen sowie über Fahrzeuggeschwindigkeitsgrenzen vorschreibt. Verbrauchs-/$CO_2$-optimale Parametergrenzen können sich jedoch in Abhängigkeit eines zu fahrenden oder gefahrenen Geschwindigkeitsprofils (individuelle Fahrweise, Verkehrsbedingungen, variable Umweltbedingungen) ändern. Dadurch kann bei einem solchen Verfahren das maximale Effizienzpotenzial unter Umständen nicht vollständig ausgeschöpft werden.

Es gibt Ansätze, bei denen Betriebsstrategien für Parallelhybridantriebe realisiert werden, die auf der Grundlage der sogenannten *Equivalent Consumption Minimization Strategy* (ECMS) bzw. *Adaptive-ECMS* (A-ECMS) beruhen.

Einen solchen Ansatz für ein Parallelhybridsystem stellt Sciaretta et al: "Optimal Control of Parallel Hybrid Electric Vehicles" in IEEE Transactions on Control Systems Technology, Vol. 12, No. 3, May 2004 dar. Bei diesem Ansatz wird eine Kostenfunktion minimiert, die aus Summanden der verbrauchten Kraftstoffenergie und der elektrischen Energie gebildet wird. Dabei wird die elektrische Energie durch einen Equivalenzfaktor gewichtet, der zeitabhängig ist und unter Berücksichtigung aktueller Betriebszustände und dem Batterieladezustand (SOC) dynamisch im Betrieb angepasst wird und so die Leistungsaufteilung optimieren soll. Für ein serielles bzw. seriell-paralleles Hybridsystem ist dieser Ansatz jedoch nicht vorgesehen.

Einen adaptiven ECMS-Ansatz verfolgt Musardo et al: "A-ECMS: An Adaptive Algorithm for Hybrid Electric Vehicle Energy Management" in European Journal of Control (2005) 11: 509-524. Auch bei diesem Ansatz geht es um eine Kostenfunktion, in der über einen Equivalenzfaktor die elektrische Energie mit der verbrennungsmotorischen Energie vergleichbar gemacht wird. Dieses Verfahren ist jedoch um ein nach vorne gerichtetes (prädiktives) Element ergänzt, sodass der Equivalenzfaktor auch unter Berücksichtigung zukünftiger bzw. erwarteter Betriebszustände bestimmt werden kann und so der Leistungssplit vorausschauend (adaptiv) bestimmbar ist. Auch dieses Verfahren ist nur im Zusammenhang mit einem Parallelhybrid dargestellt.

Bei Hybridfahrzeugen werden die Nachladestrategien über Steuergeräte (ECU - Engine Control Unit) gesteuert. Die Nachladestrategien werden dabei in Abhängigkeit von der Abweichung eines aktuellen Ladezustands/State of Charge (SOC) der Batterie von einem Initialwert (Soll-SOC) gesteuert. Je nachdem, wie weit der Ist-Ladezustand (SOC) der Batterie vom Soll-Ladezustand (Soll-SOC) abweicht, wird die Nachladefunktion aktiviert. Nähert sich der Ist-Ladezustand (SOC) dem gewünschten, voreingestellten Initialwert (Soll-SOC), so wird die Ladeaktivität minimiert oder ganz eingestellt. Solche Nachladestrategien beruhen auf vergleichsweise einfachen mathematischen Modellen, die lediglich SOC-Abweichungen (Soll/Ist) berücksichtigen. Sie sind daher nicht effizienzoptimal. So bleiben effizientere Nachladesituationen unberücksichtigt, die auch bei einer geringen oder gar keiner Abweichung zwischen dem State of Charge (SOC) und dem Soll-SOC möglich sind.

Beispielsweise stellt die EP 3 106 362 A1 ein Verfahren zur Online-Adaption einer Kennlinie eines Hybridfahrzeugs vor, wobei der Verlauf der Kennlinie an in Abhängigkeit von einem Ladezustand verschiebbaren Unterteilungsgrenzen fest vorgegeben ist.

Zur Erzielung einer maximalen Ladeeffizienz bei Hybridantrieben kann eine Nachladung auch in Betriebszuständen sinnvoll sein, bei denen der Batterieladezustand nahe oder gleich dem Initialwert ist. Es gibt sogar Fälle, bei denen aus Effizienzgründen ein Ladezustand oberhalb dieses Initialwertes sinnvoll sein kann.

Ein gattungsgemäßes Verfahren zum Steuern einer Antriebseinrichtung eines Hybridfahrzeuges wird von Harry Hamann et al. vorgestellt in "Development of an Energy Management Strategy for a Series-Parallel Hybrid Electric Vehicle", 12th symposium hybrid and electric vehicles, 24. Februar 2015 (2015-02-24), Seiten 261-291, XP055500171, Braunschweig, ISBN: 978-3-937655-35-2.

Es besteht demgegenüber die Aufgabe, ein Verfahren zum Steuern einer Antriebseinrichtung eines Hybridfahrzeuges bereitzustellen, bei dem die Aktivierung eines Lademodus insbesondere unter Effizienzgesichtspunkten optimiert ist, und eine Kostengrenze im Betriebszeitraum neu bestimmbar ist.

Diese Aufgabe wird durch das erfindungsgemäße Verfahren gemäß Anspruch 1 und durch ein Hybridfahrzeug gemäß Anspruch 6 gelöst.

Erfindungsgemäß ist ein Verfahren zum Steuern einer Antriebseinrichtung eines Hybridfahrzeuges, die einen Verbrennungsmotor, eine erste Elektromaschine, eine zweite Elektromaschine und eine Batterie umfasst. Dabei ist die Antriebseinrichtung zum Antrieb des Hybridfahrzeuges wählbar in jedem der folgenden Betriebsmodi betreibbar:

einem ersten elektrischen Betriebsmodus (Antriebsmodus), bei dem auf die zweite Elektromaschine im elektromotorischen Betrieb ein Fahrantriebsdrehmoment bewirkt, während der Verbrennungsmotor still steht;
einem zweiten elektrischen Betriebsmodus (Rekuperationsmodus), bei dem auf die zweite Elektromaschine ein Raddrehmoment wirkt und diese im generatorischen Betrieb Strom zum Laden der Batterie erzeugt, während der Verbrennungsmotor still steht;
einem seriellen Betriebsmodus, bei dem der Verbrennungsmotor die erste Elektromaschine zur Erzeugung von elektrischer Energie antreibt, welche die zweite Elektromaschine antreibt, die ein Fahrantriebsdrehmoment bewirkt; und
einem parallelen Betriebsmodus, bei dem der Verbrennungsmotor ein Fahrantriebsdrehmoment bewirkt,

wobei im seriellen oder parallelen Betriebsmodus die Verbrennungskraftmaschine in einem ersten seriellen oder parallelen Lademodus eine (die zweite) Elektromaschine zur Erzeugung von zusätzlicher elektrischer Ladeenergie zum Laden der Batterie antreibt und das Verfahren umfasst:

Bestimmen einer Kostengrenze,
Steuern der Antriebseinrichtung mittels einer Umschaltlogik zum Aktivieren des ersten parallelen oder seriellen Lademodus,
Ermitteln einer seriellen und/oder einer parallelen Kostenfunktion, die jeweils auf dem Verhältnis zwischen einer benötigten Kraftstoffmehrleistung zum Aufladen der Batterie und einer resultierenden Batterieladeleistung beruht,
Vergleich von serieller und/oder paralleler Kostenfunktion, mit der Kostengrenze, Aktivieren des ersten seriellen oder parallelen Lademodus, wenn die Kostenfunktion in einem Betriebspunkt unter einer Kostengrenze liegt,

wobei
das Bestimmen der Kostengrenze umfasst:

die Auswahl einer Standardkostengrenze, und
in einem Betriebszeitraum:

Bestimmen einer optimierten Kostengrenze auf der Grundlage eines Geschwindigkeitsprofils und/oder
Anpassen der Standardkostengrenze auf der Grundlage eines Betriebszustands, einer Betriebsstrategie
und/oder eines Fahrerwunschs,

wobei das Verfahren aufweist:

Bestimmen eines Lademodus in einem Betriebspunkt, in dem die serielle und/oder parallele Kostenfunktion über
ein Niveau verbrauchsoptimaler Kosten erhöhten Ladekosten entspricht, für die gilt:

$$C_{add}(t_i) = C_{opt}(t_i) + [\,b_{c,Grenz} - C_{opt}(t_i)\,]\,/\,T_f$$

wobei $b_{c,Grenz}$ eine absolute obere Kostengrenze bezeichnet, und für den Faktor $T_f$ gilt: $T_f \geq 1$.

Dadurch dass der Lademodus in Abhängigkeit von einer Kostengrenze aktiviert wird, die mit einer Kostenfunktion verglichen wird, lässt sich das Problem lösen, die Ladefunktion nur dann zu aktivieren, wenn eine bestimmte (feste) Soll-SOC erreicht ist oder nicht.

In die Bestimmung der Kostengrenze können flexible und zeitabhängige Größen einfließen, so dass die Kostengrenze selbst flexibel und jeweils nur für einen begrenzten Zeitraum eingestellt werden kann. Bei einer erhöhten Kostengrenze besteht ein erhöhter Nachladebedarf. Das heißt, es ist hier sinnvoll, auch zu Lasten eines höheren Kraftstoffverbrauches den Nachladebetriebszustand zu wählen.

Alternativ zu einem Lademodus in einem Betriebspunkt, in dem die serielle und/oder parallele Kostenfunktion über ein Niveau verbrauchsoptimaler Kosten erhöhten Ladekosten entspricht, sind nicht beanspruchte

Ausführungen denkbar, bei denen der Lademodus in einem Betriebspunkt bestimmt würde in dem die serielle und/oder parallele Kostenfunktion einem verbrauchsoptimalen Betriebszustand entspräche. Liege grundsätzlich die Situation vor, dass in einem Ausgangsbetriebspunkt die Kostenfunktion unterhalb der Kostengrenze verliefe, so wäre der einzustellende Nachladebetriebspunkt des Verbrennungsmotors verbrauchsoptimal (maximale Effizienz) eingestellt.

So ein optimaler Nachladebetriebspunkt wird im parallelen Betrieb über die Analyse von Willans-Linien realisiert und im seriellen Betrieb entlang der Linie eines optimal kombinierten Wirkungsgrades aus Verbrennungsmotor und Generator.

Bei dem erfindungsgemäßen Verfahren umfasst das Bestimmen der Kostengrenze: die Auswahl einer Standardkostengrenze, das Bestimmen einer optimierten Kostengrenze auf der Grundlage eines Geschwindigkeitsprofils und/oder das Anpassen der Standardkostengrenze auf der Grundlage eines Betriebszustands, einer Betriebsstrategie und/oder eines Fahrerwunschs.

Damit kann für jeden Zyklusabschnitt (Fahrzyklusabschnitt in einem bestimmten Zeitintervall) die Kostengrenze neu bestimmt werden.

So eine Standard- oder auch Ausgangskostengrenze kann dabei beispielsweise aus Erfahrungs- und/oder Versuchswerten die fahrzeug- bzw. antriebsabhängig gewonnen werden. Die Berücksichtigung eines Geschwindigkeitsprofils dabei erlaubt es, die Kostengrenze hinsichtlich eines tatsächlichen oder aber auch eines prädizierten, also erwarteten, Geschwindigkeitsverlaufs anzupassen. Alternativ und ergänzend ist es aber auch möglich, die Standardkostengrenze bzw. die optimierte Kostengrenze auf der Grundlage eines Betriebszustands, einer Betriebsstrategie und/oder eines Fahrerwunschs anzupassen.

Dabei gibt es Verfahren, bei denen der Betriebszustand eine Fahrgeschwindigkeit, eine Komponentengrenze (z. B. ein maximaler SOC) und/oder einen Komponentenzustand (z. B. einen State of Health/SOH einer Antriebsbatterie) umfasst. So ein Ansatz ermöglicht die Berücksichtigung mehrerer, unterschiedlicher und nicht zusammenhängender Betriebszustände.

Es gibt Verfahren, bei denen das Geschwindigkeitsprofil ein prädiziertes Geschwindigkeitsprofil umfasst, welches unter optionaler Berücksichtigung von Navigationsdaten, Simulationsprognosen und/oder von Verkehrsdaten bestimmbar ist. Damit kann die Kostengrenze hochflexibel an die tatsächlich vorliegenden oder erwarteten Rahmenbedingungen des Fahrzeugbetriebs angepasst werden.

Es gibt auch Ausführungen, bei denen der Fahrerwunsch einen wählbaren Betriebszustand umfasst. Bei so einer Ausführung lässt sich durch aktives Eingreifen des Fahrers die Kostengrenze verändern. So ein wählbarer Betriebszustand kann beispielsweise ein Eco-Modus sein, ein Sport-Modus, ein Elektro-Modus, oder ein Boost-Modus, in dem praktisch die Kostengrenze auf ein wählbares, festes Maximal- bzw. Minimalniveau eingestellt werden kann, ohne dass dabei tatsächliche Geschwindigkeitsprofile berücksichtigt werden. Über das aktive Eingreifen können solche Betriebszustände auch vorbereitet werden.

Alternativ zu einem Lademodus in einem Betriebspunkt, in dem die serielle und/oder parallele Kostenfunktion über ein Niveau verbrauchsoptimaler Kosten erhöhten Ladekosten entspricht, sind nicht beanspruchte

Ausführungen denkbar, bei denen für die verbrauchsoptimalen Kosten die Randbedingung gelten müsste, dass diese unterhalb der aktuellen Kostengrenze liegen müssten . Damit wäre sichergestellt, dass der Betriebspunkt immer effizienzmaximiert unterhalb der Kostengrenze gewählt wäre.

In dem erfindungsgemäßen Verfahren, bei dem ein Betriebspunkt mit erhöhten Ladekosten gewählt wird, gilt, dass dieser oberhalb der verbrauchsoptimalen Kosten liegen muss. Damit ist es möglich, auch einen Betriebszustand einzunehmen, bei dem ggf. sogar die Kostengrenze überschritten werden kann.

Es soll jedoch verhindert werden, dass eine maximale Kostengrenze überschritten wird. Dies wird dadurch sichergestellt, dass die erhöhten Ladekosten maximal der Summe aus den verbrauchsoptimalen Kosten und der Differenz aus der maximalen Kostengrenze und den verbrauchsoptimalen Kosten, die durch einen Teiler (Skalierungsfaktor) $T_f \geq 1$ skaliert wird, entsprechen. Ist der Teiler $T_f = 1$, so entsprechen die erhöhten Ladekosten der maximalen Kostengrenze.

Weitere vorteilhafte Ausgestaltungen der Erfindung ergeben sich aus den Unteransprüchen und der folgenden Beschreibung bevorzugter Ausführungsbeispiele der vorliegenden Erfindung.

Daneben ist es auch wünschenswert, ein Verfahren zur Steuerung einer Antriebseinrichtung eines Hybridfahrzeuges, insbesondere mit einem seriell-parallelen Hybridantrieb, bereitzustellen, dass geeignet ist, die Fahrmodi elektrisches Fahren, serielles verbrennungsmotorisches Fahren und paralleles verbrennungsmotorisches Fahren zu steuern und zu optimieren und eine optimierbare Auswahl dieser Betriebsmodi zu treffen.

Dazu kann daneben und/oder ergänzend ein Verfahren zum Steuern einer Antriebseinrichtung eines Hybridfahrzeuges vorgesehen werden, die eine Verbrennungskraftmaschine, eine erste Elektromaschine, insbesondere ein Generator, eine zweite Elektromaschine, insbesondere ein Elektromotor, und eine Batterie umfasst, wobei die Antriebseinrichtung zum Antrieb des Hybridfahrzeuges in mehreren Betriebsmodi betreibbar ist und die Betriebsmodi umfassen:

- einen ersten elektrischen Betriebsmodus (auch elektrisches Fahren), bei dem die zweite Elektromaschine im elektromotorischen Betrieb ein Fahrantriebsdrehmoment bewirkt, während die Verbrennungskraftmaschine stillsteht bzw. keinen eigenen mechanischen Antriebsbeitrag leistet;
- einen zweiten elektrischen Betriebsmodus (auch Rekuperation), bei dem auf die zweite Elektromaschine ein Raddrehmoment wirkt und diese im generatorischen Betrieb Strom zum Laden der Batterie erzeugt, während die Verbrennungskraftmaschine stillsteht bzw. keine Antriebs- und/oder Abtriebsleistung abgibt oder aufnimmt;
- einen seriellen Betriebsmodus (auch serielles Fahren), bei dem die Verbrennungskraftmaschine die erste Elektromaschine zur Erzeugung von elektrischer Energie antreibt, welche damit die zweite Elektromaschine speist, die ein Fahrantriebsmoment bewirkt; und
- einen parallelen Betriebsmodus (auch paralleles Fahren), bei dem die Verbrennungskraftmaschine ein Fahrantriebsdrehmoment bewirkt, wobei das Verfahren umfasst:
- Steuern der Antriebseinrichtung mittels einer ersten Umschaltlogik zum Einstellen eines Betriebsmodus,
- Ermitteln einer (dimensionslosen) seriellen Ersparnisfunktion $S_{ser}(t)$ und einer parallelen Ersparnisfunktion $S_{par}(t)$, die jeweils auf dem Verhältnis zwischen einer benötigten Kraftstoffleistung ($P_{f,par}$; $P_{f,ser}$) und einer benötigten Batterieentladungsleistung ($P_{Bat,dis}$) an einem Betriebspunkt beruht,
- Bestimmen einer Ersparnisgrenze auf der Grundlage eines Verbrauchskriteriums (29) für ein Geschwindigkeitsprofil in einem Betriebszeitraum,
- Vergleich von serieller Ersparnisfunktion, paralleler Ersparnisfunktion und Ersparnisgrenze an einem Betriebspunkt,
- Auswahl eines der Betriebsmodi aufgrund eines Vergleichsergebnisses und Einstellen des ausgewählten Betriebsmodus.

Den Kern des Verfahrens bilden die oben dargestellten Schritte zur Ermittlung einer optimalen Betriebsstrategie bzw. zur Auswahl eines optimalen Betriebsmodus. Dies erfolgt beispielsweise ausgehend von einem Rückwärtsmodell, in dem für einen aktuellen Fahrzustand (Drehzahl und Drehmoment der Antriebsräder), die Drehmomente und Drehzahlen der Antriebskomponenten ermittelt werden. Es werden für alle möglichen Betriebsmodi/Fahrmodi (elektrisch, parallel, seriell) Betriebspunkte bestimmt. Mithilfe dieser Daten können dimensionslose Ersparnisfunktionen (nachfolgend auch Sparfunktionen) für den seriellen Betrieb und für den parallelen Betrieb ermittelt werden.

Die Ersparnisfunktion stellt das Verhältnis zwischen einer benötigten Kraftstoffleistung (für verbrennungsmotorisches Fahren) an einem bestimmten Betriebspunkt und der zugehörigen Batterieentladungsleistung (für elektrisches Fahren an diesem Betriebspunkt) dar. Grundsätzlich gilt dabei, dass mit wachsender benötigter Kraftstoffleistung die Vorteile des elektrischen Betriebes überwiegen. Das gleiche gilt auch bei einer Absenkung der erforderlichen elektrischen Leistung (im Vergleich zur erforderlichen Kraftstoffleistung). In beiden Fällen steigt das Ersparnispotenzial (angegeben über die Ersparnisfunktion) für den Kraftstoffverbrauch und ein elektrischer Betrieb wird mit einem zunehmenden Wert der Ersparnisfunktion vorteilhaft. Die eigentliche Umschaltlogik zwischen den drei aktiven Betriebsmodi (elektrisches Fahren, serielles Fahren und paralleles Fahren) ist mithilfe einer Ersparnisgrenze (einer zu optimierenden Konstante) zu realisieren. Diese Konstante wird für jedes Betriebsintervall (Zeitintervall) neu bestimmt. Dadurch ergibt sich eine effizienzoptimale Adaption der Betriebsstrategie an das realisierte oder zu erwartende Geschwindigkeitsprofil (der Begriff "Geschwindigkeitsprofil" soll hier nicht auf die physikalische Größe Geschwindigkeit beschränkt werden, sondern kann auch weitere Größen berücksichtigen, die sich auf die Fahrgeschwindigkeit auswirken können. Solche Größen sind z. B. auch ein Streckenprofil, ein Streckenzustand (z. B. Fahrbahnbelag) und Umwelteinflüsse wie Gegenwind, Wetter etc.). Über die Anpassung der Ersparnisgrenze wird die Entscheidung beeinflusst, wann welcher der möglichen Betriebsmodi ausgewählt ist.

Dabei gibt es Verfahren, bei denen das Bestimmen der Ersparnisgrenze umfasst:

- Auswahl einer Initialersparnisgrenze,
- Auswerten eines bekannten Geschwindigkeitsprofils,
- Bestimmen einer optimierten Ersparnisgrenze auf der Grundlage des bekannten Geschwindigkeitsprofils.

Diese einfache rückwärtsgewandte Strategie sichert zum einen das stabile Funktionieren des Verfahrens, indem immer eine (universell brauchbare) Initialersparnisgrenze zur Verfügung gestellt werden kann und erlaubt zum anderen die Berücksichtigung eines aktuell durchfahrenen Betriebszyklus mit einem bestimmten Geschwindigkeitsprofil, das wiederum benutzt werden kann, die ursprüngliche Initialersparnisgrenze zu optimieren, d. h. in anderen Worten die Ersparnisgrenze zu bestätigen, anzuheben oder abzusenken. Ein Absenken der Ersparnisgrenze führt zu einem verstärkten elektrischen Betrieb, der bei niedrigeren Geschwindigkeiten in der Regel der sinnvollere ist, und ein Anheben zu einem verstärkten seriellen, bzw. parallelen Fahrbetrieb.

Es gibt Verfahren, bei denen das Bestimmen der optimierten Ersparnisgrenze optional einen der folgenden Schritte umfasst:

- Auswahl eines bekannten Geschwindigkeitsprofils,
- Bestimmen einer verbesserten Initialersparnisgrenze auf der Grundlage von Navigationsdaten und/oder Simulationsprognosen,
- Prädizieren eines zukünftigen Geschwindigkeitsprofils,
- Bestimmen einer optimierten Ersparnisgrenze auf der Grundlage eines prädizierten Geschwindigkeitsprofils unter optionaler Berücksichtigung von Verkehrs- und/oder Fahrzeugdaten.

So kann durch einfache Erweiterungsschritte die Einstellung der Ersparnisgrenze verändert, angepasst und an die aktuelle Fahr- bzw. Fahrzeugsituation angepasst werden. Es können beispielsweise bekannte typische Geschwindigkeitsprofile zugrunde gelegt werden (ggf. auch ortsabhängig). Weiter kann die Ersparnisgrenze verbessert werden, indem Navigationsdaten und/oder Simulationsprognosen verwendet werden, die auf einem zu erwartenden Fahrzyklus (Geschwindigkeits-, Streckenprofil) beruhen. Dazu können auch zukünftige Geschwindigkeitsprofile vorhergesagt werden (beispielsweise in Abhängigkeit von einem bestimmten Fahrer, von einem Beladungszustand des Fahrzeugs). Dabei können auch optional zusätzlich Verkehrs- und Navigationsdaten berücksichtigt werden.

Dabei gibt es Verfahren, bei denen der erste elektrische Betrieb (elektrischer Antrieb) eingestellt wird, falls für die serielle Sparfunktion gilt, dass diese $\neq 0$ ist. Dieses Kriterium klammert "unmögliche" Betriebszustände aus, bei denen entweder die erforderliche Entladeleistung unendlich groß ist oder die erforderliche Kraftstoffleistung = 0 ist. So können z. B. Rekuperations- oder Bremsphasen (zweiter elektrischer Betrieb) ausgeklammert werden. Darüber hinaus muss gelten, dass die serielle Sparfunktion die Ersparnisgrenze überschreitet und die parallele Sparfunktion ebenfalls diese Schwelle überschreitet bzw. der Wert für die parallele Sparfunktion = 0 ist, was beispielsweise bedeutet, dass kein paralleler Betrieb möglich ist (z. B. wenn eine für den parallelen Betrieb erforderliche Mindestgeschwindigkeit des Fahrzeugs bzw. eine Mindestdrehzahl des Verbrennungsmotors unterschritten wird). Durch die dynamisch angepasste Ersparnisgrenze wird die Wahl des elektrischen Fahrens ebenfalls dynamisiert.

Dabei gibt es Verfahren, bei denen der serielle Betriebsmodus eingestellt wird, falls der Wert für die serielle Sparfunktion $\neq 0$ ist, und die Ersparnisgrenze nicht überschreitet und gleichzeitig der Wert für die parallele Sparfunktion oberhalb der Ersparnisgrenze liegt oder oberhalb des Wertes der seriellen Ersparnisfunktion oder = 0 ist. Durch diese Kriterien werden elektrische, serielle und parallele Betriebsmodi gegeneinander abgegrenzt.

Dabei gibt es auch Verfahren, bei denen der parallele Betriebsmodus dann eingestellt wird, wenn die serielle Sparfunktion $\neq 0$ ist, und unterhalb der Ersparnisgrenze liegt und gleichzeitig die parallele Sparfunktion ebenfalls unterhalb der Ersparnisgrenze oder unterhalb der seriellen Sparfunktion oder $\neq 0$ ist. In diesen Fällen ist der verbrennungsmotorische Antrieb (paralleles Fahren) dem elektrischen Antrieb mit verbrennungsmotorischer Stromerzeugung (serielles Fahren) vorzuziehen.

Dabei gibt es Verfahren, bei denen zwischen der Verbrennungskraftmaschine und dem Antriebsstrang eine feste Getriebestufe wirkt und der parallele (verbrennungsmotorische) Betriebsmodus nur einstellbar ist, wenn die Fahrgeschwindigkeit oberhalb einer bestimmten Fahrgeschwindigkeitsschwelle liegt. Durch diese Maßnahme wird der parallele Betriebsmodus auf den geeigneten Drehzahl- (und Drehmomenten)-Bereich des Verbrennungsmotors beschränkt. Die Fahrgeschwindigkeitsschwelle korreliert dabei in der Regel mit einer Leerlaufdrehzahl oder einer Mindestdrehzahl, bei der ein bestimmtes Antriebsmoment bereitgestellt werden kann, und hängt dabei von der Getriebeübersetzung zwischen Verbrennungsmotor und Antriebsrädern ab. Auf diese Weise ist der Verbrennungsmotor auch im parallelen Betrieb sinnvoll zu betreiben, ohne dass ein aufwendiges Schaltgetriebe oder ein variables Getriebe erforderlich wäre. Dieses wird durch den alternativen seriellen Betrieb bzw. durch den elektrischen Betrieb ersetzt.

Mathematisch lässt sich das oben gesagte auch wie folgt darstellen:

Hinsichtlich der Auswahl der Betriebsmodi auf der Grundlage einer Ersparnisfunktion gilt:

Die dimensionslose serielle Ersparnisfunktion ist durch:

$$(1) \qquad S_{ser}(t) = \frac{P_{f,ser}(t)}{P_{bat,dis}(t)}$$

angegeben und die dimensionslose parallele Ersparnisfunktion durch:

$$(2) \qquad S_{par}(t) = \frac{P_{f,par}(t)}{P_{bat,dis}(t)}$$

die jeweils für die Dauer eines Betriebszyklus betrachtet werden (t gibt dabei den aktuell betrachteten Zeitpunkt des Betriebszyklus an), wobei gilt:

$$(3) \qquad t \in t_{cycle,start} \cdots t_{cycle,end}$$

dabei bezeichnet $t_{cycle,start}$ den Anfangszeitpunkt und $t_{cycle,end}$ den Endzeitpunkt eines Betriebszyklus.
Die serielle Kraftstoffleistung wird durch

$$(4) \qquad P_{f,ser}(t) = \frac{M_{eng}(t)\omega_{eng}(t)}{\eta_{eng}(t)} + \Delta P_{eng,aux}(t)$$

und die parallele Kraftstoffleistung durch

$$(5) \qquad P_{f,par}(t) = \frac{M_{eng}(t)\omega_{eng}(t)}{\eta_{eng}(t)} + \Delta P_{eng,aux}(t)$$

angegeben.
Dabei entspricht

$$(6) \qquad M_{eng}(t)\omega_{eng}(t)$$

der Leistung des Verbrennungsmotors an einem Betriebspunkt bei einem bestimmten Drehmoment $M_{eng}(t)$ und einer (Winkel)Geschwindigkeit $\omega_{eng}(t)$,

$$(7) \qquad \eta_{eng}(t)$$

dem Wirkungsgrad des Verbrennungsmotors und

$$(8) \qquad \Delta P_{eng,aux}(t)$$

der zusätzlichen benötigten Leistung von Hilfsaggregaten (z. B. Pumpen)
Die Entladeleistung wird durch

$$(9) \qquad P_{bat,dis}(t) = \frac{P_{EM2}(t)}{\eta_{EM2}(t)\eta_{DcAc}(t)} + P_{v,bat}(t) + P_{aux}(t)$$

angegeben, wobei

$$(10) \qquad P_{EM2}(t)$$

die erforderliche Antriebsleistung (motorisch) der zweiten Elektromaschine (Antriebsmotor) zum elektrischen Fahren,

$$(11) \qquad \eta_{EM2}(t)\eta_{DcAc}(t)$$

das Produkt der Wirkungsgrade der zweiten Elektromaschine und des Spannungswandlers, also den Gesamtwirkungsgrad, und

$$(12) \qquad P_{v,bat}(t) + P_{aux}(t)$$

die Verlustleistung der Batterie und von Hilfsaggregaten bezeichnen.

Serielle und/oder parallele Ersparnisfunktion werden mit der Ersparnisgrenze $b_s$ - ebenfalls dimensionslos - verglichen. Es wird dabei zwischen einem Standard-Initial- oder Anfangswert, einem weiter verbesserten Wert und einem optimierten Wert für bs unterschieden, die gemäß dem erfindungsgemäßen Verfahren ausgewählt oder ermittelt werden.

Hinsichtlich dem erfindungsgemäßen Ansatz zum effizienzoptimierten Nachladen unter Berücksichtigung einer Kostenfunktion für den jeweiligen Betriebszustand ist folgendes zu beachten.

Für die dimensionslose, serielle Kostenfunktion gilt weiter:

$$(13) \qquad C_{ser}(t,wl) = \frac{\Delta P_{f,ser}(t,wl)}{\Delta P_{bat,chg,ser}(t,wl)}$$

und für die dimensionslose, parallele Kostenfunktion gilt:

$$(14) \qquad C_{par}(t,wl) = \frac{\Delta P_{f,par}(t,wl)}{\Delta P_{bat,chg,par}(t,wl)}$$

Dabei ist die zum Laden zusätzlich benötigte Kraftstoffmehrleistung beim seriellen Fahren durch:

$$(15) \qquad \Delta P_{f,ser}(t,wl) = \frac{\Delta M_{eng}(t,wl)\Delta\omega_{eng}(t,wl)}{\eta_{eng}(t,wl)}$$

angegeben und beim parallelen Fahren durch:

$$(16) \qquad \Delta P_{f,par}(t, wl) = \frac{\Delta M_{eng}(t, wl)\, \omega_{eng}(t)}{\eta_{eng}(t, wl)}$$

die daraus resultierende Batterieladeleistung ist beim seriellen Fahren durch:

$$(17) \qquad \Delta P_{bat,chg,ser}(t, wl) = \Delta M_{eng}(t, wl)\, \Delta\omega_{eng}(t, wl)\, \eta_{em1}(t, wl)\, \eta_{DcAc}(t, wl)\, \eta_{bat}(t, wl)$$

und beim parallelen Fahren durch:

$$(18) \qquad \Delta P_{bat,chg,par}(t, wl) = \Delta M_{eng}(t, wl)\, \omega_{eng}(t)\, \eta_{em1}(t)\, \eta_{DcAc}(t)\, \eta_{bat}(t)$$

angegeben.

Damit gelten für die Kostenfunktionen auch die Beziehungen:

$$(19) \qquad \frac{1}{C_{par}}(t, wl) = \eta_{eng}(t, wl)\, \eta_{em1}(t)\, \eta_{DcAc}(t)\, \eta_{bat}(t)$$

und

$$(20) \qquad \frac{1}{C_{ser}}(t, wl) = \eta_{eng}(t, wl)\, \eta_{em1}(t, wl)\, \eta_{DcAc}(t, wl)\, \eta_{bat}(t, wl)$$

Für die Betriebspunkte $C_{opt}$ zum effizienzoptimalen Laden gilt in einem Betriebsintervall $t_i$:

$$(21) \qquad C_{opt}(t_i) \leq b_C(t_i)$$

Für die Betriebspunkte $C_{add}$ mit erhöhter Ladeleistung gilt:

$$(22) \qquad C_{add}(t_i) > C_{opt}(t_i)$$

und weiter:

$$(23) \qquad C_{add}(t_i) = C_{opt}(t_i) + \frac{b_{cGrenz} - C_{opt}(t_i)}{T_f}$$

dabei bezeichnet $b_{cGrenz}$ eine absolute obere Kostengrenze und $T_f$ einen Skalierungsfaktor, für den gilt:

$$(24) \qquad T_f \geq 1$$

Ausführungsbeispiele der vorliegenden Erfindung werden nun anhand der Zeichnung beispielhaft erläutert. Darin zeigt:

Fig. 1    eine schematische Darstellung eines erfindungsgemäßen Hybridfahrzeugs, welches mit einer Antriebseinrichtung versehen ist, die mithilfe des erfindungsgemäßen Verfahrens steuerbar ist;

Fig. 2    eine schematische Darstellung eines Ausführungsbeispiels eines erfindungsgemäßen Verfahrens zum Steuern der in Fig. 1 dargestellten Antriebseinrichtung;

Fig. 3      ein Diagramm, das beispielhaft den Verlauf einer Ersparnisfunktion für den seriellen Betriebsmodus zusammen mit einem Geschwindigkeitsprofil darstellt;

Fig. 4      ein Diagramm, das beispielhaft den Verlauf einer Ersparnisfunktion für den parallelen Betriebsmodus zusammen mit dem Geschwindigkeitsprofil darstellt;

Fig. 5      ein Diagramm, in dem die Ersparnisfunktionen für den parallelen und seriellen Betriebsmodus dargestellt sind sowie die zugehörigen Betriebsmodi im Geschwindigkeitsprofil eingetragen sind;

Fig. 6      ein Diagramm zur Erläuterung der Bestimmung einer Ersparnisgrenze;

Fig. 7      ein Ablaufdiagramm, in dem eine Optimierungslogik der Ersparnisgrenze dargestellt ist;

Fig. 8      eine schematische Darstellung zur Erklärung einer optimierten Batterieladestrategie im seriellen Betriebsmodus;

Fig. 9      ein Diagramm zur Erklärung einer optimierten Batterieladestrategie im parallelen Betriebsmodus;

Fig. 10      Ein Ablaufdiagramm, in dem die Optimierungslogik der Kostengrenze dargestellt ist; und

Fig. 11      ein Diagramm, welches die Realisierung verbrauchsoptimaler Kosten und erhöhter Ladekosten im Zusammenhang mit einer absoluten Kostengrenze darstellt.

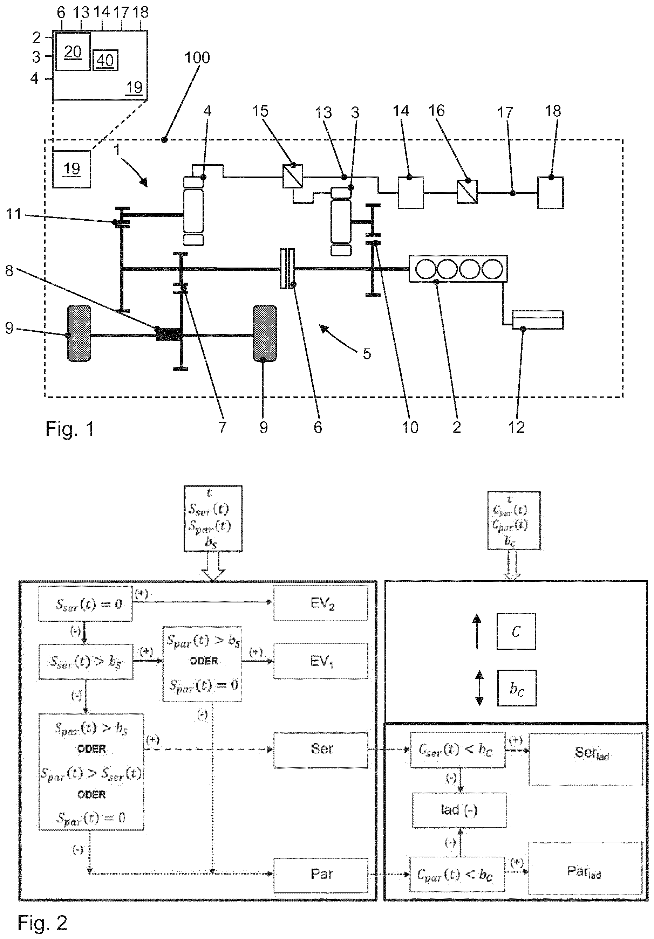

Das in Fig. 1 dargestellte erste Ausführungsbeispiel eines Hybridfahrzeugs 100 (angedeutet durch den gestrichelten Rahmen) umfasst eine Antriebseinrichtung 1 mit einem Verbrennungsmotor 2, einer ersten elektrischen Maschine 3, die vornehmlich als Generator dient, einer zweiten elektrischen Maschine 4, die vornehmlich als elektrischer Antriebsmotor dient, und einem Antriebsstrang 5, der eine Trennkupplung 6 umfasst, die zwischen dem Verbrennungsmotor 2 und einer Getriebestufe 7 angeordnet ist. Die Getriebestufe 7 koppelt den Antriebsstrang 5 mit einem Differenzialgetriebe 8, über deren Wellenenden die Antriebsräder 9 angetrieben werden können.

Dabei ist der Antriebsstrang 5 zwischen Trennkupplung 6 und Verbrennungsmotor 2 über ein erstes Getriebe 10 mit der ersten elektrischen Maschine 3 gekoppelt. Die zweite elektrische Maschine 4 ist über ein zweites Getriebe 11 auf der Abtriebsseite der Trennkupplung 6 mit dem Antriebsstrang 5 und damit mit dem Differenzialgetriebe 8 und den Antriebsrädern 9 gekoppelt.

Im Betrieb wird der Verbrennungsmotor 2 über einen Kraftstofftank 12 mit Kraftstoff versorgt. Die zweite elektrische Maschine (der elektrische Antriebsmotor) wird über ein Traktionsnetz 13 (höherer Spannung) aus einem als Traktionsbatterie 14 ausgebildeten Energiespeicher und einem zwischengeschalteten DC/AC-Wandler (Wechselrichter) 15 mit elektrischer Energie versorgt. Die Stromversorgung erfolgt entweder aus der Traktionsbatterie 14 (erster elektrischer Betriebsmodus/elektrisches Fahren) oder über den vom Verbrennungsmotor 2 angetriebenen Generator 3 (serieller Betriebsmodus/serielles Fahren). Beim seriellen Fahren ist die Kupplung 6 geöffnet.

Weiterhin versorgt die Traktionsbatterie 14 über eine Umspannungseinrichtung (DC/DC-Wandler) 16 und das daran gekoppelte Bordnetz 17 (niedrigerer Spannung) einen zweiten als Bordnetzbatterie ausgebildeten Energiespeicher 18. Beim parallelen Fahren (paralleler Betriebsmodus) wirkt der Verbrennungsmotor 2 über die geschlossene Trennkupplung 6 auf die Getriebestufe 7 und treibt über das Differenzialgetriebe 8 die Antriebsräder an.

Beim Rekuperieren (zweiter elektrischer Betriebsmodus/rekuperierendes Fahren) werden die Antriebsräder 9 durch das (verzögerte) Rollen des Fahrzeugs 100 angetrieben und übertragen die Roll-/Verzögerungsenergie über das Differenzialgetriebe 8, die Getriebestufe 7 und das zweite Getriebe 11 auf die zweite elektrische Maschine 4 (die in einem generatorischen Betriebsmodus ist) und erzeugt dort elektrische Energie, die über den DC/AC-Wandler 15 an die Traktionsbatterie 14 geliefert wird.

Über ein Steuergerät 19, welches mit dem Verbrennungsmotor 2, der ersten elektrischen Maschine 3, der zweiten elektrischen Maschine 4, ggf. der Trennkupplung 6 sowie mit weiteren Elementen des Traktionsnetzes 13 und des Bordnetzes 17 gekoppelt ist, werden die einzelnen Betriebsmodi elektrisches Fahren, Rekuperieren, paralleles Fahren und/oder serielles Fahren gemäß dem weiter unten dargestellten Verfahren eingestellt.

Zusätzlich steuert das Steuergerät 19 einen Ladebetrieb im seriellen bzw. im parallelen Betriebsmodus. Dazu wird im seriellen Betriebsmodus der Lastpunkt des Verbrennungsmotors 2 angehoben, so dass durch ein erhöhtes Drehmoment und/oder eine erhöhte Drehzahl durch die an der ersten elektrische Maschine 3 angreifende erhöhte Leistung mehr elektrische Energie erzeugt wird als zum Antrieb der zweiten elektrischen Maschine 4 erforderlich ist. Dieser Energieüberschuss dient zum Laden der Traktionsbatterie 14.

Im parallelen Betriebsmodus/beim parallelen Fahren veranlasst das Steuergerät 19 ggf. ebenfalls eine Lastpunktanhebung des Verbrennungsmotors 2 durch Erhöhung des Antriebsmoments bei der gewünschten Antriebsdrehzahl. Dieses zusätzliche Verbrennungsmotormoment wird bei geschlossener Trennkupplung über das erste Getriebe an die erste elektrische Maschine 3 (Generator) geliefert, welche die so gewonnene elektrische Energie ebenfalls zur Speisung der Traktionsbatterie 14 erzeugt.

Fig. 2 zeigt ein Ablaufschema bzw. eine Schaltlogik 20, die zur Wahl der unterschiedlichen Betriebsmodi elektrisches Fahren $EV_1$, Rekuperation $EV_2$, serielles Fahren SER und paralleles Fahren PAR führt. Als Eingabe dient ein Datenblock 21, der einen einem Betriebszykluszeitraum entsprechenden Zeitbereich t berücksichtigt und innerhalb dieses Zeitraums t eine serielle Ersparnisfunktion:

$$(1) \qquad S_{ser}(t) = \frac{P_{f,ser}(t)}{P_{bat,dis}(t)}$$

und eine parallele Ersparnisfunktion

$$(2) \qquad S_{par}(t) = \frac{P_{f,par}(t)}{P_{bat,dis}(t)}$$

ermittelt und unter Berücksichtigung einer Ersparnisgrenze bs die Betriebszustände auswählt. Die Ersparnisfunktionen $S_{ser}(t)$ sowie $S_{par}(t)$ ergeben sich aus dem Verhältnis zwischen einer benötigten Kraftstoffleistung $P_f(t)$ und einer benötigten Batterieentladungsleistung $P_{bat,dis}(t)$ an einem Betriebspunkt zu einer Zeit t.

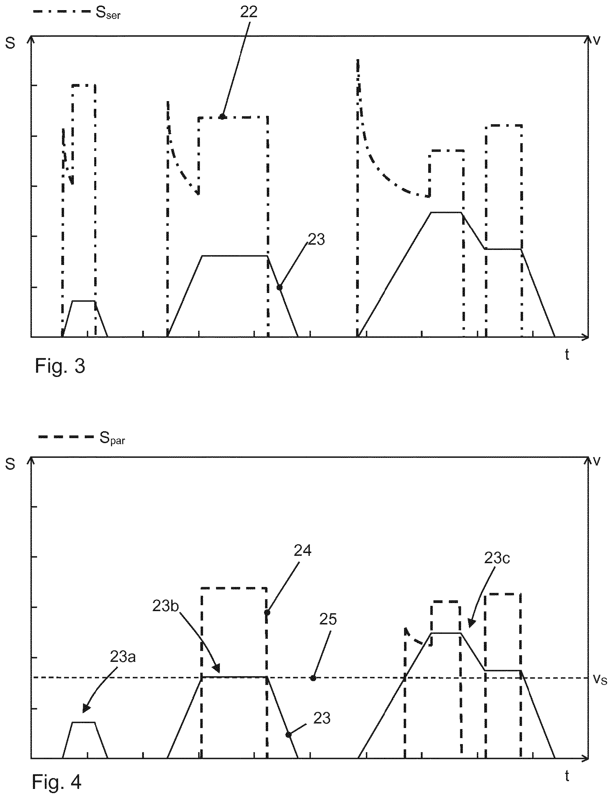

Der Verlauf 22 der seriellen Ersparnisfunktion ist Fig. 3 zu entnehmen, wo diese über ein Geschwindigkeitsprofil 23 dargestellt ist. Das Profil 22 zeigt, dass beim Anfahren aus dem Stillstand die Ersparnisfunktion zunächst sprunghaft ansteigt, um dann bei Erreichen der gewünschten Geschwindigkeit wieder etwas abzufallen. Bei konstanter Geschwindigkeit bleibt die Ersparnisfunktion konstant, und zwar in Abhängigkeit vom Geschwindigkeitsniveau. Bei einem niedrigen Geschwindigkeitsniveau (linker Geschwindigkeitsberg) ist der Wert der Ersparnisfunktion relativ hoch, da bei dieser Geschwindigkeit die benötigte Batterieentladungsleistung relativ klein gegenüber der benötigten Kraftstoffleistung ist. Je höher das Geschwindigkeitsniveau, desto niedriger verläuft das Plateau der Ersparnisfunktion.

Fig. 4 zeigt den Verlauf 24 der parallelen Ersparnisfunktion über dem Geschwindigkeitsprofil 23. Eine parallele Ersparnisfunktion wird erst ab einem Grenzgeschwindigkeitsniveau 25 bei einer Mindestgeschwindigkeit oder Geschwindigkeitsschwelle $v_s$ bestimmt (mittleres Geschwindigkeitsprofil 23b). Diese Geschwindigkeitsschwelle $v_s$ ist durch den Drehzahlbereich des Verbrennungsmotors 2 und die Getriebestufe 7 vorgegeben, über die die Antriebswelle des Verbrennungsmotors 2 mit dem Differenzial 8 gekoppelt ist. Unterhalb dieser Geschwindigkeit $v_s$ ist kein verbrennungsmotorischer Betrieb möglich (linkes Geschwindigkeitsprofil 23a). $v_s$ korreliert beispielsweise mit der Leerlaufdrehzahl des Verbrennungsmotors 2 und hängt weiter von der Getriebeübersetzung und der Antriebsradgröße (Reifenhalbmesser) ab. Auch hier verläuft der Verlauf der Ersparnisfunktion 24 ähnlich. Ab dem Erreichen des Mindestgeschwindigkeitsniveaus 25 ist paralleles Fahren möglich und damit eine Bestimmung der parallelen Ersparnisfunktion, die zunächst ansteigt (anfänglich erhöhte Beschleunigungslast) und dann mit zunehmender Geschwindigkeit wieder abfällt und bei Erreichen der Endgeschwindigkeit wieder auf ein konstantes Niveau ansteigt (rechtes Geschwindigkeitsprofil 23c). Auch hier gilt qualitativ, dass die Ersparnisfunktion umso höher ist, umso niedriger die Geschwindigkeit ist. Mit anderen Worten, bei relativ niedriger Geschwindigkeit, aber oberhalb des Grenzniveaus 25, ist die benötigte Batterieentladungsleistung relativ klein im Vergleich zur benötigten Kraftstoffleistung. Im Verzögerungsbetrieb, also beim Bremsen, sinken beide Ersparnisfunktionen jeweils auf 0 ab, da die benötigte Kraftstoffleistung in diesem Zustand ebenfalls auf 0 absinkt.

Zurückkehrend zur Fig. 2 zeigt die Schaltlogik 20 die Bedingungen für die jeweiligen Betriebsmodi. Demnach wird der zweite elektrische Betriebsmodus (Rekuperieren) $EV_2$ eingenommen, wenn die serielle Sparfunktion = 0 ist (und die Fahrgeschwindigkeit ≠ 0).

Zur Festlegung der weiteren Betriebsmodi ist eine dimensionslose Ersparnisgrenze bs zu ermitteln. Diese ergibt sich aus dem Ansatz, dass bei relativ hohen Geschwindigkeiten der verbrennungsmotorische Betrieb (seriell oder parallel) tendenziell günstiger ist als der elektrische Betrieb, da hier das Kraftstoffeinsparpotenzial geringer ist. Diese Ersparnisgrenze bs wird ausgewählt bzw. festgelegt und ggf. angepasst (das Verfahren dazu ist weiter unten beschrieben).

Bei der Auswahl der anderen Betriebsmodi gilt dann für den Fall, dass der Wert für die serielle Ersparnisfunktion $S_{ser}(t)$ ≠ 0 ist und die Ersparnisgrenze bs überschreitet und gleichzeitig die parallele Ersparnisfunktion ebenfalls die Ersparnisgrenze bs überschreitet oder die parallele Ersparnisfunktion = 0 ist, dass der erste elektrische Betriebsmodus $EV_1$ (elektrisches Fahren) ausgewählt wird.

Das serielle Fahren (serieller Betriebsmodus Ser) wird dagegen ausgewählt, wenn die serielle Sparfunktion $S_{ser}$ ≠ 0 ist und ≤ $b_s$ und gleichzeitig die parallele Sparfunktion $S_{par}$ > bs ist oder die parallele Sparfunktion größer ist als die serielle Sparfunktion oder die parallele Sparfunktion = 0 ist.

Das parallele Fahren (paralleler Betriebsmodus Par) wird dagegen ausgewählt, wenn die serielle Sparfunktion $S_{ser}$ ≤ $b_s$ ist und entweder die parallele Sparfunktion $S_{par}$ ≤ $b_s$ oder ≤ $S_{ser}$ oder ≠ 0 ist. Der parallele Betriebsmodus wird ebenfalls ausgewählt, wenn die serielle Sparfunktion $S_{ser}$ > bs ist und die parallele Sparfunktion $S_{par}$ entweder ≤ $b_s$ oder ≠ 0 ist.

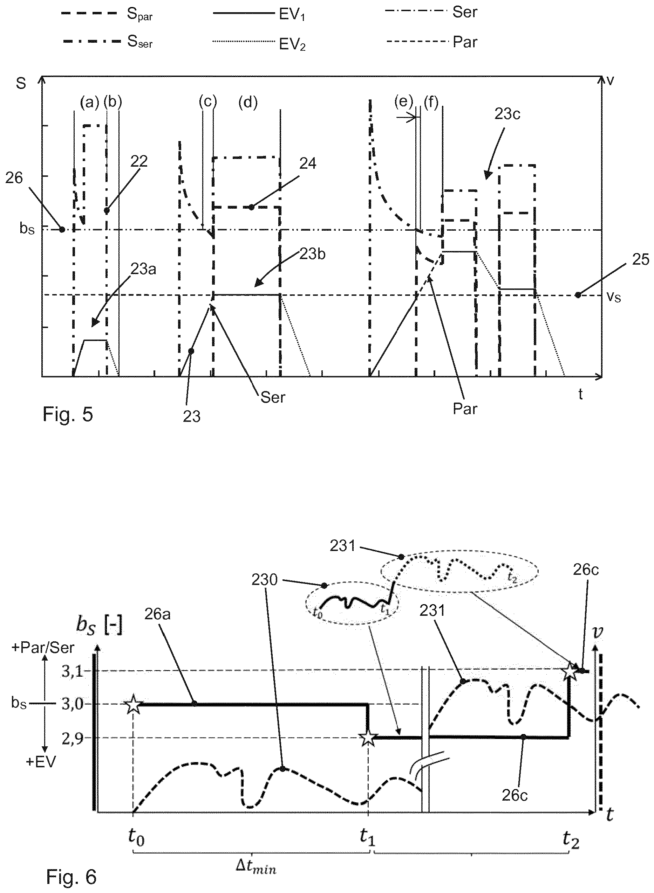

Fig. 5 zeigt das Geschwindigkeitsprofil 23, den Verlauf 22 der seriellen Ersparnisfunktion und den Verlauf der parallelen Ersparnisfunktion 24 in einer Zusammenschau gemeinsam mit einem Ersparnisgrenzniveau 26 und dem Grenzgeschwindigkeitsniveau 25 sowie im Geschwindigkeitsprofil gekennzeichnet die Fahrzustände elektrisches Fahren, serielles Fahren, paralleles Fahren und Rekuperation.

In dem in Fig. 5 dargestellten Diagramm ist auf der linken Seite ein dimensionsloser Ersparniswert S als Ordinate über die Zeit t (Abszisse) aufgetragen, der dem Profil 22 der seriellen Ersparnisfunktion, dem Profil 24 der parallelen Ersparnisfunktion und der Ersparnisgrenze $b_s$ 26 zugeordnet ist. Auf der rechten Seite bildet die Geschwindigkeit v die Ordinate, die ebenfalls über der Zeit t aufgetragen ist und für das Geschwindigkeitsprofil 23 und die Fahrgeschwindigkeitsschwelle $v_s$ 25 gilt.

Links unten dem Geschwindigkeitsprofil 23a folgend findet zunächst ein geringer Anstieg auf die Geschwindigkeit $v_1$ statt. In diesem Zeitabschnitt a verläuft das serielle Ersparnisprofil 22 oberhalb der Ersparnisgrenze bs. Es gilt $S_{ser}(t) > bs$. Gleichzeitig verharrt das parallele Ersparnisprofil 24 bei 0, das unterhalb der Fahrgeschwindigkeitsschwelle $v_s$ 25 verläuft (kein paralleler Betrieb möglich). Daher gilt für den Bereich a der erste elektrische Betriebsmodus (elektrisches Fahren).

Im Abschnitt b sinkt die Geschwindigkeit wieder auf 0 und die serielle Ersparnisfunktion sinkt ebenfalls auf 0 ab. Es gilt $S_{ser}(t) = 0$. Daher gilt für diesen Verzögerungsbereich der zweite elektrische Betriebsmodus ($EV_2$), in dem rekuperierend gefahren wird (Geschwindigkeitsprofil gepunktet dargestellt).

Im Abschnitt c, dem zweiten Teil einer Beschleunigungsphase (am Anfang des zweiten Geschwindigkeitshügels 23b im Geschwindigkeitsprofil 23, fällt nun die serielle Ersparnisfunktion unter die Ersparnisgrenze ($b_s$) 26. Damit gelten die Bedingungen für den seriellen Betriebsmodus, nämlich $S_{ser}(t) \neq 0$ und $S_{ser}(t) \leq b_s$ und $S_{par}(t) = 0$ (die parallele Ersparnisfunktion liegt hier noch bei 0, da erst die Endgeschwindigkeit $v_s$ hier genau der Fahrgeschwindigkeitsschwelle 25 entspricht und bis dahin kein paralleler Fahrbetrieb möglich ist).

Im Abschnitt d dagegen steigt das serielle Ersparnisprofil 22 wieder über die Ersparnisgrenze 26 und das parallele Ersparnisprofil 24 liegt ebenfalls über der Ersparnisgrenze 26. Damit gelten die Bedingungen für den ersten elektrischen Betriebsmodus (strichpunktierter Abschnitt im Geschwindigkeitsprofil 23), nämlich dass $S_{ser}(t) > bs$ und $S_{par}(t) > bs$. Beim erneuten Abbremsen gelten dann wieder die Bedingungen für den zweiten elektrischen Betriebsmodus $EV_2$/rekuperierendes Fahren.

Folgt man dem Geschwindigkeitsprofil weiter bis zum Beginn des Abschnitts e, so gelten bis dahin die Bedingungen für den ersten elektrischen Betriebsmodus $EV_1$ (elektrisches Fahren). Danach verläuft die serielle Ersparnisfunktion (bis zum Ende des Abschnitts e) noch oberhalb der Ersparnisgrenze 26. Es gilt also $S_{ser}(t) > bs$ und gleichzeitig gilt die Bedingung, dass die parallele Ersparnisfunktion unterhalb der Ersparnisgrenze bs liegt, $S_{par}(t) < bs$, und es gilt auch, dass die parallele Ersparnisfunktion $\neq 0$ ist. Damit wird der parallele Betriebsmodus (paralleles Fahren) ausgewählt, der im Geschwindigkeitsprofil strichliert dargestellt ist.

Dieser Betriebszustand wird auch für den Abschnitt f beibehalten. Hier sinkt zwar die serielle Ersparnisfunktion unter die Ersparnisgrenze 26 ab. Gleichzeitig ist aber keine der Bedingungen erfüllt, nämlich dass die parallele Ersparnisfunktion oberhalb der Ersparnisgrenze 26 verläuft, die parallele Ersparnisfunktion größer als die serielle Ersparnisfunktion ist oder dass die parallele Ersparnisfunktion = 0 ist. Damit ergibt sich auch für den Bereich f der parallele Betriebsmodus. Auf dem Plateau wird dann wieder in den ersten elektrischen Betriebsmodus gewechselt, da hier sowohl die serielle Ersparnisfunktion als auch die parallele Ersparnisfunktion oberhalb der Ersparnisgrenze 26 liegen.

Fig. 5 zeigt also, dass ein Vergleich von serieller Ersparnisfunktion, paralleler Ersparnisfunktion und Ersparnisgrenze an einem Betriebspunkt die Auswahl eines Betriebsmodus festlegt, nach der in Fig. 2 dargestellten Umschaltlogik. Das Diagramm zeigt auch, dass bei einem Verschieben der Ersparnisgrenze nach oben bzw. nach unten die verbrennungsmotorisch unterstützten Betriebszustände verlängert werden (mehr serielles und paralleles Fahren) bzw. verkürzt werden (mehr elektrisches Fahren).

Diesen Zusammenhang zeigt auch Fig. 6. Diese Figur zeigt die Veränderung der Ersparnisgrenze bs in Abhängigkeit von einem Ausgangswert oder einer Initialersparnisgrenze 26a, dass aufgrund eines tatsächlichen Fahrprofils 230 nach einem Mindestzeitraum $\Delta t_{min}$ abgesenkt wird auf einen optimierten Wert 26b, um dann auf der Grundlage eines zukünftigen oder prädizierten Fahrprofils 231 auf einen Wert 26c angehoben zu werden.

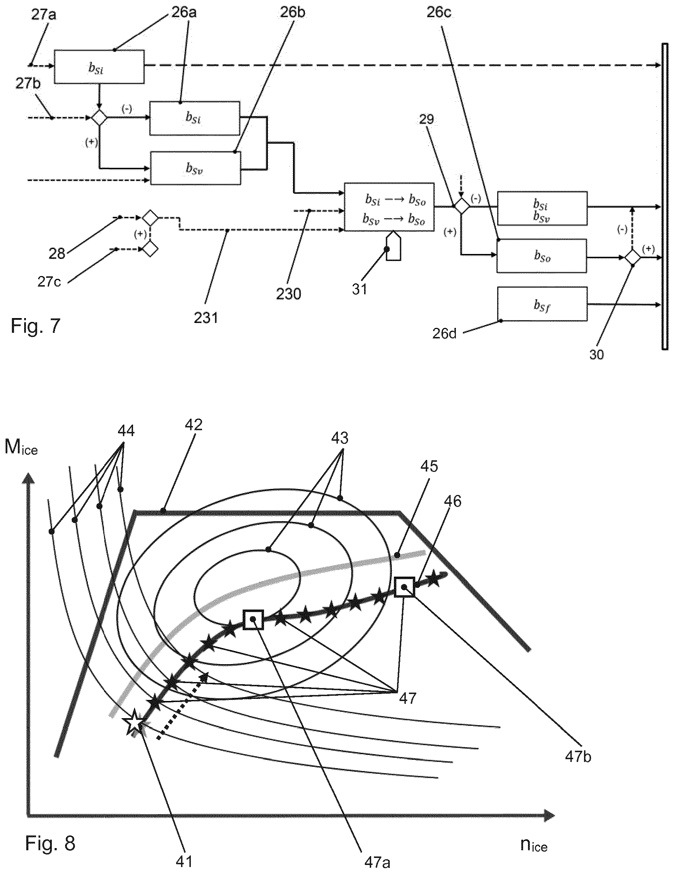

Fig. 7 zeigt die zur Bestimmung und Variation der Ersparnisgrenze bs erforderliche Steuerungslogik. Dabei wird auf der Grundlage einer Simulationsprognose 27a zunächst eine Initialersparnisgrenze $b_{Si}$ 26a ausgewählt oder festgelegt. Sind ergänzende Navigationsdaten 27b verfügbar, so kann die Simulationsprognose verbessert werden und es kann auf der Grundlage dieser Daten ein verbesserter Initialwert $b_{Sv}$ 26b ausgewählt werden. Sind keine Navigationsdaten verfügbar, so wird der Wert für die Initialersparnisgrenze $b_{Si}$ 26a weiter verwendet. Die Optimierung ($b_{Sv} \rightarrow b_{So}$) der Initialersparnisgrenze 26a oder der verbesserten Initialersparnisgrenze 26b kann nun über die beiden in der Fig. 6 dargestellten Mechanismen erfolgen. In die Optimierung kann entweder das Fahrprofil aus der Vergangenheit 230 einfließen oder das zukünftige Fahrprofil 231, welches über eine Prädiktionsfunktion 28 und gegebenenfalls verfügbare Navigationsdaten 27c ermittelt wird.

Durch eine anschließende Verbrauchsauswertung (z. B. mittels eines in der Motorsteuerung hinterlegten Modells) wird ein Verbrauchskriterium 29 geprüft, nämlich ob sich ein optimierter Kraftstoffverbrauch ergibt oder nicht. Wenn ja, wird die optimierte Ersparnisgrenze 26c verwendet, andernfalls die Initialersparnisgrenze 26a bzw. die verbesserte Initialersparnisgrenze 26b. Die optimierte Ersparnisgrenze 26c wird jedoch nur dann verwendet, wenn das Mindestzeitintervall $\Delta t_{min}$ für eine Veränderung der Ersparnisgrenze überschritten ist. Dies wird im Prüfschritt 30 festgestellt. Die Einhaltung von Mindestzeitintervallen ist erforderlich, um ein sogenanntes "Toggeln" (schnelles Hin- und Herschalten zwischen Betriebsmodi) zu verhindern bzw. einzuschränken. Die oben beschriebene dynamische Veränderung der Ersparnisgrenze 26 - und zwar ausgehend von einer Initialersparnisgrenze 26a - erlaubt zum einen eine stabile Anwendung des Verfahrens (es gibt immer einen sinnvollen Wert für die Ersparnisgrenze 26) und zum anderen eine dynamische Anpassung an sich ändernde oder prognostizierte Betriebszustände. In weiteren optionalen Schritten kann die Optimierung durch zusätzliche Parameter 31, wie zum Beispiel eine Berücksichtigung der Fahrzeugmasse oder Einflüsse der Umweltbedingungen (Temperatur, Luftfeuchtigkeit, Wind etc.), auf die Fahreigenschaften oder die aktuelle Fahrzeugneigung ergänzt werden.

Es ist auch möglich, in Abhängigkeit von bevorzugten Betriebsstrategien oder Kundenwünschen feste, einstellbare Werte 26d als Ersparnisgrenze bsf vorzugeben. Dies kann zu einer gewünschten Bevorzugung einzelner Betriebsmodi führen.

Fig. 2 zeigt eine weitere Schaltlogik 40, mit deren Hilfe entschieden wird, ob im seriellen oder parallelen Betriebsmodus die Verbrennungskraftmaschine 2 in einem seriellen oder parallelen Lademodus ($Ser_{lad}$; $Par_{la}$) die erste Elektromaschine 3 zur Erzeugung von zusätzlicher elektrischer Ladeenergie zum Laden der Traktionsbatterie 14 antreibt. Dabei wird die bereits oben beschriebene serielle bzw. parallele Kostenfunktion, die jeweils auf dem Verhältnis zwischen einer benötigten Kraftstoffmehrleistung zum Aufladen der Batterie und einer daraus resultierenden Batterieladeleistung beruht, genutzt. Die Kostenfunktionen werden dabei jeweils zu einer Zeit t mit einer Kostengrenze $b_C$ (Eingabe 21a) verglichen (Schaltlogik 40). Dabei wird ein Lastpunkt des Verbrennungsmotors 2 ausgehend von einer erforderlichen Radleistung so weit angehoben, bis die Kostengrenze erreicht wird.

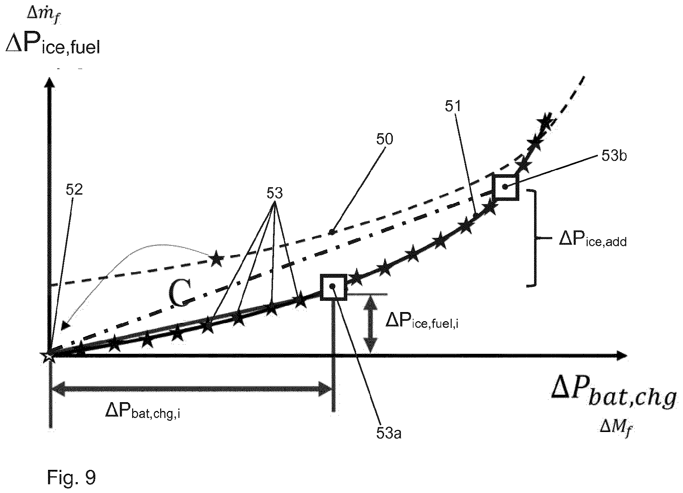

Diesen Einstellmechanismus erläutert für den seriellen Betriebsmodus die Fig. 8 und für den parallelen Betriebsmodus die Fig. 9.

Im seriellen Betriebsmodus (Fig. 8) wird ausgehend von einem Betriebs- bzw. Lastpunkt 41, an dem die durch den Generator 3 erzeugte elektrische Energie ausreicht, um die erforderliche Radleistung bereitzustellen, eine Lastanhebung durchgeführt. Der Betriebspunkt 41 ist in einem Kennfeld des Verbrennungsmotors 2 dargestellt, in dem das Drehmoment über der Drehzahl aufgetragen ist. Darin ist die Kennlinie 42 für den maximalen Momentenverlauf (Volllastgrenze) eingetragen, Verbrauchslinien 43, die einen konstanten spezifischen Verbrauch angeben, sowie Leistungskennlinien 44, die eine konstante Leistung des Verbrennungsmotors angeben. Weiter ist angegeben ein Verlauf, der die verbrauchsoptimalen Lastpunkte des Verbrennungsmotors 2 angibt ($b_e$-Linie 45). Für den kombinierten verbrennungsmotorischen/elektrischen Betrieb im seriellen Betriebsmodus ist diese Lastkurve etwas nach unten verschoben und verläuft entlang einer optimierten Wirkungsgradkurve 46, auf der die optimalen Betriebszustände (Verbrauchsminimale) im seriellen Betrieb aufgetragen sind.

Gilt nun für den Betriebspunkt 41 die Bedingung, dass die Kostenfunktion unterhalb der Kostengrenze verläuft, so kann durch eine Lastpunktanhebung auf Betriebspunkte 47 mit zusätzlicher Ladeleistung entlang der optimierten Wirkungsgradkurve 46 zusätzliche Leistung am Generator 3 erzeugt werden, die zum Laden der Traktionsbatterie 14 zur Verfügung steht. Im seriellen Betrieb kann dazu sowohl die Drehzahl als auch das Drehmoment des Verbrennungsmotors 2 erhöht werden. Die Steigerung erfolgt dabei so lange entlang der Kurve 46, bis die Kostenfunktion die Kostengrenze $b_c$ erreicht. Danach ist eine weitere Leistungssteigerung nicht mehr wirtschaftlich bzw. sinnvoll. Der verbrauchsoptimale Betriebszustand $C_{opt}$ 47a liegt dabei auf der Linie des optimalen Wirkungsgrads von Verbrennungsmotor 2 und Generator 3, welche innerhalb des Verbrennungsmotor-Kennfelds visualisiert ist. Ein erhöhtes Nachladen ist dann nur noch in Betriebspunkten $C_{add}$ 47b möglich, die weiter rechts auf dieser Kurve verlaufen und durch Kurve 43 laufen, die einen höheren spezifischen Verbrauch aufweisen.

Das Niveau der Kostengrenze wird dabei von einem Batteriezustand bestimmt. Dies kann zum Beispiel der State of Charge/Ladezustand (SOC) oder der State of Health/Alterungszustand (SOH) der Batterie sein. Das Niveau der Kostengrenze kann auch durch die Fahrzeuggeschwindigkeit (Ladereserve zum Bremsen) oder andere Parameter beeinflusst werden.

Für den parallelen Betriebszustand ist die Situation in Fig. 9 dargestellt. Hier ist zum einen eine Willans-Linie 50 für eine bestimmte Drehzahl dargestellt, welche den spezifischen Kraftstoffverbrauch über das Drehmoment des Verbrennungsmotors zeigt. Im gleichen Diagramm sind die wesentlichen Parameter der Kostenfunktion für den parallelen Betriebszustand eingetragen. Die benötigte Kraftstoffmehrleistung $\Delta P_{f,par}$ ist über die daraus resultierende Batterieladeleistung $\Delta P_{bat,chg,par}$ aufgetragen (modifizierte Willans-Linie 51). Ausgehend von einem Basisbetriebspunkt 52 kann nun die Leistung des Verbrennungsmotors 2 erhöht werden, und zwar nur über eine Momentenerhöhung, da die Drehzahl durch den gewünschten Fahrzustand vorgegeben ist. Mithilfe des zusätzlichen Moments (erhöhte Leistung) wird der Generator 3 betrieben, der nun zusätzlich elektrische Leistung erzeugen kann, mit der die Traktionsbatterie 14 geladen werden kann. Die Momentenerhöhung kann nun schrittweise über die Leistungspunkte 53 entlang der modifizierten Willans-Linie 51 erfolgen, und zwar so lange, bis die Kostenfunktion die Kostengrenze erreicht. Dabei entspricht die Kostenfunktion der Steigung der Leistungskurve 51 in einem Leistungspunkt 53. Auch hier wird die Ladefunktion dann aktiviert, solange die Kostenfunktion in einem Betriebspunkt die Kostengrenze $b_C$ nicht überschreitet. Diese Kostengrenze kann jedoch dynamisch - wie auch im seriellen Modus - in Abhängigkeit von einem Batterieladezustand bzw. einer Batterieladestrategie (Abweichung eines Ist-Ladezustands von einem Soll-Ladezustand) gesenkt oder angehoben werden. Auf der modifizierten Willans-Linie 51 ist der effizienzoptimale Betriebspunkt $C_{opt}$ bei 53a eingetragen. Bei einer weiteren Leistungssteigerung des Verbrennungsmotors entlang der Willans-Linie kann die Nachladung weiter erhöht werden und zwar bis zu einem Punkt $C_{add}$ 53b, der dann weitgehend außerhalb des annähernd linearen Bereichs der Willans-Linie angefahren wird. Hier ist das Drehmoment des Verbrennungsmotors (bei konstanter Drehzahl) weiter erhöht, um eine zusätzliche Nachladeleistung $\Delta P_{ice, add}$ abzurufen.

Damit eröffnet das oben dargestellte Verfahren auch einen dynamisierbaren und optimierbaren Ladeprozess im parallelen bzw. seriellen Betriebszustand.

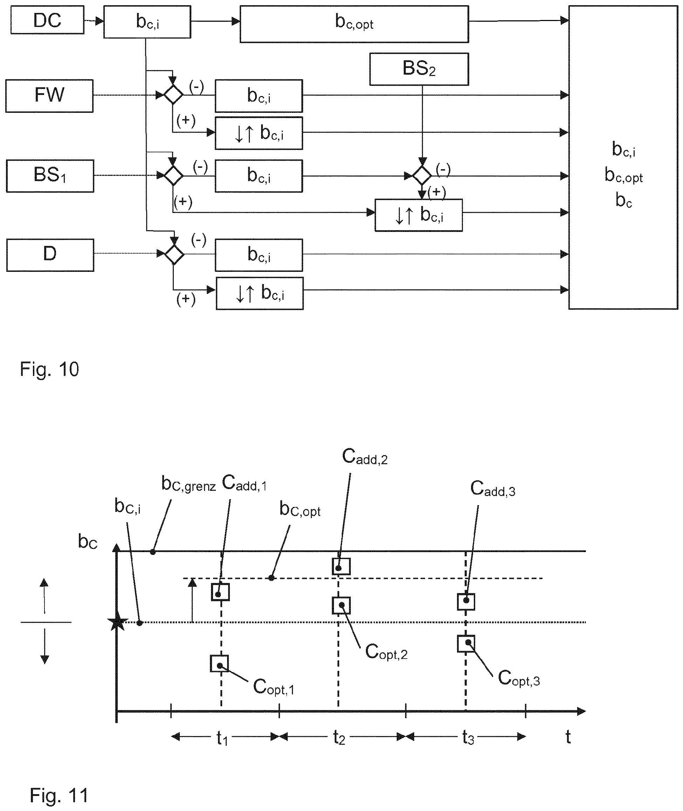

Fig. 10 und 11 zeigen eine zweistufige Adaption der Nachladung durch Anpassung der Kostengrenze $b_c$ (erste Stufe) und Adaption der Kosten C (zweite Stufe)

Fig. 10 zeigt dabei die Anpassung der Kostengrenze $b_c$. Die Anpassung erfolgt folgendermaßen:
Ausgehend von einem voreingestellten Fall (default case DC) wird ein Standardinitialwert $b_{c,i}$ ausgewählt, der beispielsweise in der Motorsteuerung hinterlegt ist. Dieser Standardinitialwert stellt eine brauchbare Kostengrenze/Nachladungsgrenze dar, für die immer ein sinnvoller Nachladebetrieb aktivierbar ist.

In einem nächsten Schritt wird dann durch die Optimierung an ein Geschwindigkeitsprofil dieser Standardinitialwert $b_{c,i}$ optimiert. Dabei kann es sich entweder um ein tatsächlich abgefahrenes Geschwindigkeitsprofil handeln oder auch ein prädiziertes Geschwindigkeitsprofil, beide jeweils für einen bestimmten Betriebszeitraum $t_i$.

Je nach Geschwindigkeitsprofil wird dabei der Standardinitialwert $b_{c,i}$ optimiert und zu einer erhöhten oder abgesenkten Kostengrenze $b_{c,opt}$ optimiert.

Alternativ kann durch andere Einflussgrößen wie einen Fahrerwunsch FW, einen ersten Betriebszustand $BS_1$, einen zweiten Betriebszustand $BS_2$ oder durch Prädiktionsdaten D verändert werden.

Der Fahrerwunsch FW kann dabei beispielsweise externe Vorgaben umfassen, die per Tastendruck in das System eingegeben werden. Dabei kann es sich z. B. um eine Veränderung des gegenwärtigen Fahrmodus handeln (Eco-/Sport-/Boost-/Elektro-Modus) handeln. So eine Vorgabe kann auch der Vorbereitung einer solchen Veränderung dienen. Soll beispielsweise ein Sport- oder Boost-Modus vorbereitet werden, so kann dies per Tastendruck eingegeben werden. Dies führt dann zu einer Erhöhung des Standardinitialwertes $b_{c,i}$ und damit zu einer Erhöhung der Kostengrenze. Dies führt dazu, dass der Nachlademodus verstärkt ausgewählt wird.

Gleiches gilt auch für einen Betriebszustand (z. B. der SOC/State of Charge), bei dessen Veränderung der Standardinitialwert $b_{c,i}$ ebenfalls verändert werden kann.

Beispielsweise kann ein Betriebszustand BS, eintreten, bei dem Komponentengrenzen erreicht bzw. überschritten werden. Dies ist der Fall, wenn der SOC an oder sogar oberhalb einer maximalen SOC-Grenze liegt. Liegt dieser Fall vor, dann wird der Standardinitialwert der Kostengrenze $b_{c,i}$ reduziert. Das heißt, Ladefunktionen werden verringert.

Ein anderer Betriebszustand $BS_2$, der zu einer Verringerung des Standardinitialwertes $b_{c,i}$ führt, liegt beispielsweise dann vor, wenn das Fahrzeug bei hoher Geschwindigkeit bewegt wird. In diesem Fall ist durch die hohe kinetische Energie des Fahrzeugs anschließend ein Fahrzustand erwartbar, bei dem bei einer Verzögerung rekuperativ Strom erzeugt wird (rekuperatives Fahren). In so einem Fall wird ebenfalls der Standardinitialwert $b_{c,i}$ abgesenkt, um eine Ladereserve für die beim Bremsen erzeugte Energie in der Batterie vorzuhalten. Das bedeutet, die Nachladeaktivitäten beim parallelen oder seriellen Betrieb müssen ebenfalls reduziert werden, damit der SOC soweit absinkt, dass für das rekuperative Fahren, bei dem Strom ins System gelangt, eine entsprechende Aufnahmekapazität in der Traktionsbatterie vorhanden ist. Schließlich können auch Prädiktionsdaten D zu einer Veränderung des Standardinitialwertes $b_{c,i}$ führen. Dazu können Navigationsdaten und Umfelddaten herangezogen werden, die beispielsweise berücksichtigen, dass ein Stadtverkehr bevorsteht, in dem elektrisches Fahren bevorzugt werden soll. In so einem Fall wird der Standardinitialwert $b_{c,i}$ erhöht, d. h. die Kostengrenze wird nach oben verschoben und die Ladeaktivitäten werden gesteigert.

Fig. 11 zeigt diskrete Betriebspunkte, die an bestimmten Zeitintervallen $t_1$ bis $t_3$ gelten sollen. Im Zusammenhang mit den eingezeichneten Kostengrenzen $b_{c,i}$ und $b_{c,Grenz}$ und veränderbaren $b_c$s ist erkennbar, inwieweit die einzelnen Betriebspunkte $C_{opt,1}$, $C_{add,1}$; $C_{opt,2}$, $C_{add,2}$ und $C_{opt,3}$, $C_{add,3}$ realisierbar sind.

So sind beispielsweise nur solche Betriebspunkte $C_{opt}$; $C_{add}$ realisierbar, die unter einer absoluten Kostengrenze $b_{c,Grenz}$ liegen. Gleichzeitig bestimmt aber auch die Lage zur tatsächlich eingestellten (variablen) Kostengrenze $b_c$ die Realisierbarkeit dieser Betriebspunkte.

Bei unverändertem Standardinitialwert $b_{c,i}$ sind nur die Betriebspunkte $C_{opt1}$ und $C_{opt3}$ realisierbar. Wird der Initialwert $b_{c,i}$ beispielsweise im Betriebszeitraum $t_1$ erhöht, und zwar über das Niveau des Betriebszustandes $C_{add,1}$, so wäre auch dieser Betriebszustand zulässig, bei dem verstärkt nachgeladen wird (s. Punkte 47b und 53b in den Fig. 8 bzw. in den Fig. 9). Dabei könnte es sich beispielsweise um eine optimierte Kostengrenze $b_{c,opt}$ handeln, die durch Adaption an ein Geschwindigkeitsprofil bestimmt wird. Diese optimierte Kostengrenze $b_{c,opt}$ würde im Betriebszeitraum $t_2$ jedoch unterhalb des Betriebspunktes $C_{add,2}$ verlaufen, so dass dieser im Betriebszeitraum $t_2$ nicht realisierbar wäre,

während der Betriebspunkt $C_{add,3}$ im Betriebszeitraum $t_3$ realisierbar wäre.

Eine Obergrenze der Betriebspunkte mit hoher zusätzlicher Ladung $C_{add,i}$ wird durch folgende Beziehung begrenzt, durch die sichergestellt ist, dass die absolute Obergrenze $b_{c,Grenz}$ nicht überschritten werden kann. Bei $b_{c,Grenz}$ handelt es sich um eine Größe, die systemabhängig mehr oder weniger unveränderbar festgelegt wird und extreme Ladezustände verhindern soll. Es gilt:

$$C_{add}(t_i) = C_{opt}(t_i) + \frac{b_{cGrenz} - C_{opt}(t_i)}{T_f}$$

mit: $1 \le T_f$

Die tatsächliche Kostenerhöhung wird dann durch den Teiler $T_f$ als Skalierungsfaktor bestimmt, der $\ge 1$ ist. Ist der Teiler = 1, ist der maximal zulässige Kostenwert für einen Betriebspunkt gleich der Kostengrenze $b_{c,Grenz}$ und die untere Grenze liegt beim optimalen Betriebspunkt (maximal effizient) beim Kostenwert $C_{opt,i}$, wenn der Teiler gegen $\infty$ geht.

Der Teiler kann beispielsweise durch bestimmte Festwerte oder aber auch durch bestimmte Funktionen bestimmt werden, welche die Veränderung der Betriebszustände $C_{add,i}$ im Verhältnis zu $b_{c,Grenz}$ und $C_{opt,i}$ festlegen, so dass sich diese Werte in sinnvoller Weise zwischen diesen Extremen bewegen.

Es sind optional weiterbildend Fälle realisierbar, bei denen das oben geschilderte Regime (Regel- und Steuerkonzept) völlig übersteuert wird und Betriebspunkte ausnahmsweise zugelassen werden, die auch oberhalb der absoluten Kostengrenze $b_{c,Grenz}$ liegen können (Notladefunktion).

Diese in der Schaltlogik 40 realisierte Ladefunktion kann auch völlig unabhängig von der in der Schaltlogik 20 realisierten Betriebszustandswahl erfolgen (z. B. bei fest eingestellten oder wählbaren Betriebszuständen oder in Verbindung mit Systemen, bei denen die Betriebszustände über feste einprogrammierte Antriebsleistungsgrenzen sowie über Fahrzeuggeschwindigkeitsgrenzen festgelegt werden).

Daneben sind auch folgende optionale Ausführungsform und Weiterbildungen mit der ersten Ausführungsform der Erfindung kombinierbar:

Bei einer zweiten Ausführungsform umfasst das Verfahren zusätzlich:

Ermitteln einer seriellen Ersparnisfunktion $S_{ser}(t)$ und einer parallelen Ersparnisfunktion $S_{par}(t)$, die jeweils auf dem Verhältnis zwischen einer benötigten Kraftstoffleistung ($P_{f,par}$;$P_{f,ser}$) und einer benötigten Batterieentladungsleistung ($P_{bat, dis}$) an einem Betriebspunkt beruhen,
Bestimmen einer Ersparnisgrenze ($b_s$) auf der Grundlage eines Verbrauchskriteriums (29) für ein Geschwindigkeitsprofil in einem Betriebszeitraum (t),
Vergleich von serieller Ersparnisfunktion $S_{ser}(t)$, paralleler Ersparnisfunktion $S_{par}(t)$ und Ersparnisgrenze ($b_s$) an einem Betriebspunkt,
Auswahl eines der Betriebsmodi ($EV_1$, $EV_2$, Ser, Par) aufgrund eines Vergleichsergebnisses
Einstellen des ausgewählten Betriebsmodus.

Bei einer ersten optionalen Weiterbildung der zweiten Ausführungsform umfasst das Bestimmen der Ersparnisgrenze (26):

Auswahl einer Initialersparnisgrenze (26a)
Auswerten eines bekannten Geschwindigkeitsprofils (230)
Bestimmen einer optimierten Ersparnisgrenze (26c) auf der Grundlage des bekannten Geschwindigkeitsprofils und/oder
Einstellen einer festen Ersparnisgrenze (26d) auf der Grundlage eines Betriebszustands, einer Betriebsstrategie und oder eines Fahrerwunschs.

Bei einer zweite optionale Weiterbildung kann der ersten Weiterbildung der zweiten Ausführungsform umfasst das Bestimmen der optimierten Ersparnisgrenze (26c) optional einen der folgenden Schritte:

Auswahl eines bekannten Geschwindigkeitsprofils (230)
Bestimmen einer verbesserten Initialersparnisgrenze (26b) auf der Grundlage von Navigationsdaten und/oder Simulationsprognosen
Prädizieren eines zukünftigen Geschwindigkeitsprofils (231)
Bestimmen einer optimierten Ersparnisgrenze (26c) auf der Grundlage eines prädizierten Geschwindigkeitsprofils (231) unter optionaler Berücksichtigung von Navigations- und/oder Verkehrsdaten.

Eine dritte optionale Weiterbildung kann die zweite Ausführungsform, die zweite Ausführungsform mit der ersten Weiterbildung oder die zweite Ausführungsform mit der ersten und der zweiten Weiterbildung weiterbilden. Bei der dritten Weiterbildung wird der erste elektrische Betrieb eingestellt, falls für die serielle Ersparnisfunktion ($S_{ser}(t)$) gilt:

$$S_{ser}(t) \neq 0$$

und

$$S_{ser}(t) > b_s$$

und für die parallele Ersparnisfunktion ($S_{par}(t)$) gilt:

$$S_{par}(t) > b_s$$

oder

$$S_{par}(t) = 0$$

Eine vierte optionale Weiterbildung kann die zweite Ausführungsform, die zweite Ausführungsform mit der ersten Weiterbildung oder die zweite Ausführungsform mit der ersten und der zweiten Weiterbildung, jeweils mit oder ohne die dritte Weiterbildung, weiterbilden. Bei der vierten Weiterbildung wird der serielle Betriebsmodus (Ser) eingestellt, falls für die serielle Ersparnisfunktion ($S_{ser}(t)$) gilt:

$$S_{ser}(t) \neq 0$$

und

$$S_{ser}(t) \leq b_s$$

und für die parallele Ersparnisfunktion ($S_{par}(t)$) gilt:

$$S_{par}(t) > b_s$$

oder

$$S_{par}(t) > S_{ser}(t)$$

oder

$$S_{par}(t) = 0$$

Eine fünfte optionale Weiterbildung kann die zweite Ausführungsform, die zweite Ausführungsform mit der ersten Weiterbildung oder die zweite Ausführungsform mit der ersten und der zweiten Weiterbildung, jeweils mit oder ohne die dritte und/oder vierte Weiterbildung, weiterbilden. Bei der fünften Weiterbildung wird der parallele Betriebsmodus (Par) eingestellt, falls für die serielle Ersparnisfunktion ($S_{ser}(t)$) entweder gilt:

$$S_{ser}(t) \neq 0$$

und

$$S_{ser}(t) \leq b_s$$

und für die parallele Ersparnisfunktion ($S_{par}(t)$) gilt:

$$S_{par}(t) \leq b_s$$

oder

$$S_{par}(t) \leq s_{ser}(t)$$

oder

$$S_{par}(t) \neq 0$$

Eine sechste optionale Weiterbildung kann die zweite Ausführungsform, die zweite Ausführungsform mit der ersten Weiterbildung oder die zweite Ausführungsform mit der ersten und der zweiten Weiterbildung, jeweils mit oder ohne die dritte, vierte und/oder fünfte Weiterbildung, weiterbilden. Bei der sechsten Weiterbildung wirkt zwischen der Verbrennungskraftmaschine (2) und der zweiten Elektromaschine (4) eine feste Getriebestufe und ist der parallele Betriebsmodus (Par) nur einstellbar, wenn die Fahrgeschwindigkeit (v(t)) oberhalb einer Fahrgeschwindigkeitsschwelle (25) liegt.

Weitere Varianten und Ausführungsbeispiele ergeben sich für den Fachmann im Rahmen der Ansprüche.

**Bezugszeichenliste**

100 Hybridfahrzeug
1 Antriebseinrichtung
2 Verbrennungsmotor
3 erste elektrische Maschine (Generator)
4 zweite elektrische Maschine (elektrischer Antriebsmotor)
5 Antriebsstrang
6 Trennkupplung
7 Getriebestufe
8 Differenzialgetriebe
9 Antriebsrad
10 erstes Getriebe
11 zweites Getriebe
12 Kraftstofftank
13 Traktionsnetz
14 Traktionsbatterie
15 DC/AC-Wandler (Wechselrichter)
16 DC/DC-Wandler (Umspannungseinrichtung)
17 Bordnetz
18 Bordnetzbatterie
19 Steuergerät
20 erste (Um)Schaltlogik
21 Datensatz
21a Eingabe

| | |
|---|---|
| 22 | Verlauf serielle Ersparnisfunktion |
| 23 | Geschwindigkeitsprofil |
| 23a | linkes Geschwindigkeitsprofil |
| 23b | mittleres Geschwindigkeitsprofil |
| 23c | rechtes Geschwindigkeitsprofil |
| 24 | Verlauf parallele Ersparnisfunktion |
| 25 | Grenzgeschwindigkeitsniveau |
| 26 | Ersparnisgrenze (Ersparnisgrenzniveau) |
| 230 | Fahrprofil (Vergangenheit/bekannt) |
| 231 | Fahrprofil (Zukunft/prädiziert) |
| 26a | Initialersparnisgrenze $b_{Si}$ |
| 26b | verbesserte Ersparnisgrenze $b_{Sv}$ |
| 26c | optimierte Ersparnisgrenze $b_{So}$ |
| 26d | feste (einstellbare) Ersparnisgrenze bsf |
| 27a | Simulationsprognose |
| 27b | ergänzende Navigationsdaten |
| 27c | weitere Navigationsdaten |
| 28 | Prädiktionsfunktion |
| 29 | Verbrauchskriterium |
| 40 | zweite (Um)Schaltlogik |
| 30 | Zeitintervallabfrage |
| 31 | zusätzliche Parameter |
| 41 | Ausgangsbetriebspunkt |
| 42 | Momentenverlauf (Lastgrenze) |
| 43 | spezifische Verbrauchslinien |
| 44 | Leistungskennlinien |
| 45 | verbrauchsoptimale Lastkurve Verbrennungsmotor |
| 46 | optimale Wirkungsgradkurve Verbrennungsmotor zweite elektrische Maschine |
| 47 | Betriebspunkte mit zusätzlicher Ladeleistung |
| 47a | verbrauchsoptimierter Betriebspunkt |
| 47b | Betriebspunkt mit erhöhter Nachladung |
| 50 | Willans-Linie |
| 51 | Kraftstoffmehrleistungsverlauf |
| 52 | Ausgangslastpunkt |
| 53 | Ladelastpunkt |
| 53a | verbrauchsoptimierter Ladelastpunkt |
| 53b | Ladelastpunkt mit erhöhter Nachladung |

Formelbezeichnungen:

| | |
|---|---|
| $S_{par}$: | parallele Ersparnisfunktion |
| $S_{ser}$: | serielle Ersparnisfunktion |
| $P_{f,par}$: | benötigte Kraftstoffleistung (parallel) |
| $P_{f,ser}$: | benötigte Kraftstoffleistung (seriell) |
| $P_{bat,dis}$: | benötigte Batterieentladeleistung |
| $M_{eng}$: | Drehmoment (Verbrennungsmotor) |
| $\omega_{eng}$: | Drehzahl (Verbrennungsmotor) |
| $\eta_{eng}$: | Wirkungsgrad (Verbrennungsmotor) |
| $\Delta P_{eng,aux}$: | benötigte Leistung von Zusatzaggregaten |
| $P_{EM2}$: | Antriebsleistung (zweite elektrische Maschine) |
| $SOC$: | Ladezustand (State of Charge) |
| $\eta_{EM2}$: | Wirkungsgrad (zweite elektrische Maschine) |
| $\eta_{EM1}$ | : Wirkungsgrad (erste elektrische Maschine) |
| $\eta_{bat}$: | Wirkungsgrad Traktionsbatterie |
| $\eta_{DcAc}$: | Wirkungsgrad Spannungswandler |
| $b_s$: | (optimierte) Ersparnisgrenze |

(fortgesetzt)

| | | |
|---|---|---|
| $C_{par}$: | parallele Kostenfunktion |
| $C_{ser}$: | serielle Kostenfunktion |
| $\Delta P_{f,par}$: | benötigte Kraftstoffmehrleistung (parallel) |
| $\Delta P_{f,ser}$: | benötigte Kraftstoffmehrleistung (seriell) |
| $\Delta P_{bat,chg,par}$: | Batterieladeleistung (parallel) |
| $\Delta P_{bat,chg,ser}$: | Batterieladeleistung (seriell) |
| $\Delta M_{eng}$: | Drehmomentänderung |
| $P_{aux}$: | Leistung von Zusatzaggregaten |
| $wl$: | Willans-Linie |
| $t$: | Betriebszeitraum |
| $P_{v,bat}$: | Batterieverlustleistung (Traktionsbatterie) |
| $b_{c,opt}$: | Kostengrenze (optimiert) |
| $b_{c,i}$: | Kostengrenze (initial); Standardinitialwert |
| $b_{c,Grenz}$: | Kostengrenze (absolut) |
| $C_{opf,i}$: | Betriebspunkt mit effizienzoptimalen Ladekosten |
| $C_{add,i}$: | Betriebspunkt mit erhöhten Ladekosten |
| $FW$: | Fahrerwunsch |
| $BS_1$: | erster Betriebszustand |
| $BS_2$: | zweiter Betriebszustand |
| $D$: | Prädiktionsdaten |
| $T$: | Teiler |

## Patentansprüche

1. Verfahren zum Steuern einer Antriebseinrichtung (1) eines Hybridfahrzeuges (100), die einen Verbrennungsmotor (2), eine erste Elektromaschine (3), eine zweite Elektromaschine (4) und eine Batterie (14) umfasst, wobei die Antriebseinrichtung (1) zum Antrieb des Hybridfahrzeuges (100) in jedem der folgenden Betriebsmodi betreibbar ist:

   ein erster elektrischer Betriebsmodus ($EV_1$), bei dem die zweite Elektromaschine (4) im elektromotorischen Betrieb ein Fahrantriebsdrehmoment bewirkt, während der Verbrennungsmotor (2) still steht;
   ein zweiter elektrischer Betriebsmodus ($EV_2$), bei dem auf die zweite Elektromaschine (4) ein Raddrehmoment wirkt und diese im generatorischen Betrieb Strom zum Laden der Batterie erzeugt, während der Verbrennungsmotor (2) still steht;
   ein serieller Betriebsmodus (Ser), bei dem der Verbrennungsmotor (2) die erste Elektromaschine (3) zur Erzeugung von elektrischer Energie antreibt, welche die zweite Elektromaschine (4) antreibt, die ein Fahrantriebsdrehmoment bewirkt; und
   ein paralleler Betriebsmodus (Par), bei dem der Verbrennungsmotor (2) ein Fahrantriebsdrehmoment bewirkt,

   wobei im seriellen oder parallelen Betriebsmodus (Ser; Par) die Verbrennungskraftmaschine (2) in einem ersten seriellen oder parallelen Lademodus ($Ser_{lad}$; $Par_{lad}$) die Elektromaschine (3, 4) zur Erzeugung von zusätzlicher elektrischer Ladeenergie zum Laden der Batterie (14) antreibt und das Verfahren umfasst:

   Bestimmen einer Kostengrenze ($b_c$),
   Steuern der Antriebseinrichtung (1) mittels einer ersten Umschaltlogik (40) zum Aktivieren des ersten parallelen oder seriellen Lademodus,
   Ermitteln einer seriellen und/oder einer parallelen Kostenfunktion ($C_{ser}(t)$; $C_{par}(t)$), die jeweils auf dem Verhältnis zwischen einer benötigten Kraftstoffmehrleistung ($\Delta P_{f,ser}(t, wl)$; $\Delta P_{f,par}(t, wl)$) zum Aufladen der Batterie und einer resultierenden Batterieladeleistung ($\Delta P_{bat,chg,ser}(t, wl)$; $\Delta P_{bat,chg,par}(t, wl)$) beruht,
   Vergleich von serieller und/oder paralleler Kostenfunktion ($C_{ser}(t)$; $C_{par}(t)$), mit der Kostengrenze ($b_c$),
   Aktivieren des ersten seriellen oder parallelen Lademodus, wenn die Kostenfunktion in einem Betriebspunkt unter einer Kostengrenze ($b_c$) liegt,

   **dadurch gekennzeichnet, dass**

das Bestimmen der Kostengrenze (b$_c$) umfasst:

die Auswahl einer Standardkostengrenze (b$_{C,i}$), und
in einem Betriebszeitraum:

Bestimmen einer optimierten Kostengrenze (b$_{C,opt}$) auf der Grundlage eines Geschwindigkeitsprofils und/oder
Anpassen der Standardkostengrenze (b$_{C,i}$) auf der Grundlage eines Betriebszustands (BS$_1$, BS$_2$), einer Betriebsstrategie und/oder eines Fahrerwunschs (FW),

wobei das Verfahren aufweist:

Bestimmen eines Lademodus in einem Betriebspunkt, in dem die serielle und/oder parallele Kostenfunktion (C$_{ser}$(t); C$_{par}$(t)) über ein Niveau verbrauchsoptimaler Kosten (C$_{opt}$(t)) erhöhten Ladekosten (C$_{add}$(t)) entspricht, für die gilt:

$$C_{add}(t_i) = C_{opt}(t_i) + \frac{b_{cGrenz} - C_{opt}(t_i)}{T_f}$$

wobei b$_{cGrenz}$ eine absolute obere Kostengrenze bezeichnet, und für den Faktor T$_f$ gilt: T$_f \geq 1$.

2. Verfahren gemäß Anspruch 1,
wobei der Betriebszustand eine Fahrgeschwindigkeit, eine Komponentengrenze (SOC) und/oder einen Komponentenzustand (SOH) umfasst.

3. Verfahren nach einem der Ansprüche 1 bis 3, wobei das Geschwindigkeitsprofil ein prädiziertes Geschwindigkeitsprofil umfasst, welches unter optionaler Berücksichtigung von Navigationsdaten, Simulationsprognosen, und/oder von Verkehrsdaten bestimmbar ist.

4. Verfahren nach einem der Ansprüche 1 bis 3, wobei der Fahrerwunsch (FW) einen wählbaren Betriebszustand umfasst.

5. Verfahren nach Anspruch 4, wobei der wählbare Betriebszustand einen der folgenden Betriebszustände umfasst: Eco-Modus, Sportmodus, Elektromodus.

6. Hybridfahrzeug (100) mit einer Antriebseinrichtung (1), die einen Verbrennungsmotor (2), eine erste Elektromaschine (3), eine zweite Elektromaschine (4), eine Batterie (14) und eine Steuerung (19), insbesondere ein Motorsteuergerät, umfasst, die dazu eingerichtet ist, das Verfahren nach einem der Ansprüche 1 bis 5 auszuführen.

## Claims

1. Method for controlling a drive device (1) of a hybrid vehicle (100), which drive device comprises an internal combustion engine (2), a first electric machine (3), a second electric machine (4) and a battery (14), wherein the drive device (1) can be operated, in order to drive the hybrid vehicle (100), in each of the following operating modes:

a first electric operating mode (EV$_1$), in which the second electric machine (4), in electric motor mode, causes a traction drive torque, while the internal combustion engine (2) is stationary;
a second electric operating mode (EV$_2$), in which a wheel torque acts on the second electric machine (4) and the second electric machine, in generator mode, generates current in order to charge the battery, while the internal combustion engine (2) is stationary;
a series operating mode (Ser), in which the internal combustion engine (2) drives a first electric machine (3) in order to generate electrical energy which drives the second electric machine (4) which causes a traction drive torque; and
a parallel operating mode (Par), in which the internal combustion engine (2) causes a traction drive torque,

wherein, in the series or parallel operating mode (Ser; Par), the internal combustion engine (2), in a first series or parallel charging mode (Ser$_{lad}$; Par$_{lad}$), drives the electric machine (3, 4) to generate additional electrical charging energy in order to charge the battery (14), and the method comprises:

determining a cost limit (b$_C$),
controlling the drive device (1) by means of a first changeover logic (40) in order to activate the first parallel or series charging mode,
ascertaining a series and/or a parallel cost function (Cser(t); Cpar(t)), which are both based on the relationship between a required fuel performance (ΔPf,ser(t,wl); (ΔPf,par(t,wl)) in order to charge the battery and a resulting battery charging power (ΔPbat,chg,ser(t,wl); ΔPbat,chg,par(t,wl)),
comparing series and/or parallel cost functions (Cser(t); Cpar(t)) with the cost limit (b$_C$),
activating the first series or parallel charging mode when the cost function is at an operating point below a cost limit (b$_C$),

**characterized in that**
determining the cost limit (b$_C$) comprises:

selecting a standard cost limit (b$_{C,i}$), and
in an operating time period:

determining an optimized cost limit (b$_{C,opt}$) on the basis of a speed profile and/or
adjusting the standard cost limit (b$_{C,i}$) on the basis of an operating state (BS$_1$, BS$_2$), an operating strategy and/or a driver request (FW),

wherein the method comprises:

determining a charging mode at an operating point at which the series and/or parallel cost function (C$_{ser}$(t); C$_{par}$(t)) corresponds to charging costs (C$_{add}$(t)) increased above a level of consumption-optimized costs (C$_{opt}$(t)), for which:

$$C_{add}(t_i) = C_{opt}(t_i) + \frac{b_{cLimit} - C_{opt}(t_i)}{T_f}$$

where b$_{cLimit}$ is an absolute upper cost limit, and, for the factor T$_f$: T$_f \geq 1$.

2. Method according to Claim 1, wherein the operating state comprises a speed of travel, a component limit (SOC) and/or a component state (SOH).

3. Method according to one of Claims 1 to 3, wherein the speed profile comprises a predicted speed profile which can be determined while optionally taking into account navigation data, simulation diagnoses and/or traffic data.

4. Method according to one of Claims 1 to 3, wherein the driver request (FW) comprises a selectable operating state.

5. Method according to Claim 4, wherein the selectable operating state comprises one of the following operating states: eco-mode, sport mode, electric mode.

6. Hybrid vehicle (100) having a drive device (1) which comprises an internal combustion engine (2), a first electric machine (3), a second electric machine (4), a battery (14) and a controller (19), in particular a motor control device which is designed to execute the method according to one of Claims 1 to 5.

**Revendications**

1. Procédé permettant de commander un dispositif d'entraînement (1) d'un véhicule hybride (100), comprenant un moteur à combustion interne (2), une première machine électrique (3), une deuxième machine électrique (4) et une batterie (14), dans lequel le dispositif d'entraînement (1) peut fonctionner dans chacun des modes de fonctionnement suivants pour entraîner le véhicule hybride (100) :

un premier mode de fonctionnement électrique (EV$_1$) dans lequel la deuxième machine électrique (4) provoque un couple d'entraînement de propulsion en fonctionnement électromoteur alors que le moteur à combustion interne (2) est à l'arrêt ;

un deuxième mode de fonctionnement électrique (EV$_2$) dans lequel un couple de roue agit sur la deuxième machine électrique (4) et celle-ci génère du courant pour charger la batterie en fonctionnement de générateur alors que le moteur à combustion interne (2) est à l'arrêt ;

un mode de fonctionnement série (Ser) dans lequel le moteur à combustion interne (2) entraîne la première machine électrique (3) pour générer de l'énergie électrique qui entraîne la deuxième machine électrique (4) qui provoque un couple d'entraînement de propulsion ; et

un mode de fonctionnement parallèle (Par) dans lequel le moteur à combustion interne (2) provoque un couple d'entraînement de propulsion,

dans lequel, dans le mode de fonctionnement série ou parallèle (Ser ; Par), le moteur à combustion interne (2) entraîne dans un premier mode de charge série ou parallèle (Ser$_{lad}$ ; Par$_{lad}$) la machine électrique (3, 4) pour générer de l'énergie de charge électrique supplémentaire afin de charger la batterie (14), et le procédé comprend les étapes consistant à :

déterminer une limite de coût (b$_c$),

commander le dispositif d'entraînement (1) au moyen d'une première logique de commutation (40) pour activer le premier mode de charge parallèle ou série,

établir une fonction de coût série et/ou parallèle (Cser(t) ; Cpar(t)) qui est basée respectivement sur le rapport entre une puissance supplémentaire de carburant nécessaire (ΔPf,ser(t, wl) ; ΔPf,par(t, wl) pour recharger la batterie et une puissance de charge de batterie résultante (ΔPbat,chg,ser(t, wl) ; ΔPbat,chg,par(t), wl),

comparer la fonction de coût série et/ou parallèle (Cser(t) ; Cpar(t)) avec la limite de coût (b$_c$),

activer le premier mode de charge série ou parallèle si la fonction de coût est située à un point de fonctionnement sous une limite de coût (b$_c$),

**caractérisé en ce que** la détermination de la limite de coût (b$_c$) comprend :

la sélection d'une limite de coût standard (b$_{c,i}$), et

dans une période de fonctionnement :

déterminer une limite de coût optimisée (b$_{c,opt}$) sur la base d'un profil de vitesse, et/ou

adapter la limite de coût standard (b$_{c,i}$) sur la base d'un état de fonctionnement (BS$_1$, BS$_2$) d'une stratégie de fonctionnement et/ou d'un souhait du conducteur (FW),

le procédé présentant :

la détermination d'un mode de charge à un point de fonctionnement auquel la fonction de coût série et/ou parallèle (C$_{ser}$(t) ; C$_{par}$(t)) correspond à des coûts de charge (C$_{add}$(t)) augmentés au-delà d'un niveau de coûts optimisés en consommation (C$_{opt}$(t), pour lesquels :

$$C_{add}(t_i) = C_{opt}(t_i) + \frac{b_{cLimite} - C_{opt}(t_i)}{T_f}$$

où b$_{cLimite}$ désigne une limite de coût supérieure absolue, et pour le facteur T$_f$ : T$_f$ ≥ 1.

2. Procédé selon la revendication 1, dans lequel l'état de fonctionnement comprend une vitesse de déplacement, une limite des composants (SOC) et/ou un état des composants (SOH).

3. Procédé selon l'une quelconque des revendications 1 à 3, dans lequel le profil de vitesse comprend un profil de vitesse prédit qui peut être déterminé en tenant compte en option de données de navigation, de pronostics de simulation et/ou de données de trafic.

4. Procédé selon l'une quelconque des revendications 1 à 3, dans lequel le souhait du conducteur (FW) comprend un état de fonctionnement sélectionnable.

5. Procédé selon la revendication 4, dans lequel l'état de fonctionnement sélectionnable comprend l'un des états de fonctionnement suivants : un mode économique, un mode sport, un mode électrique.

6. Véhicule hybride (100) comprenant un dispositif d'entraînement (1) qui comprend un moteur à combustion interne (2), une première machine électrique (3), une deuxième machine électrique (4), une batterie (14) et un dispositif de commande (19), en particulier un appareil de commande de moteur qui est conçu pour exécuter le procédé selon l'une quelconque des revendications 1 à 5.

Fig. 1

Fig. 2

Fig. 3

Fig. 4

Fig. 5

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015222691 A1
- EP 3106362 A1

**In der Beschreibung aufgeführte Nicht-Patentliteratur**

- Drive Mode optimization and Path Planning for Plug-in Hybrid Electric Vehicles. **CHI-KIN CHAU et al.** ARXIV.ORG. Cornell University Library, 201 OLIN LIBRARY CORNELL UNIVERSITY, 02. November 2016
- **SCIARETTA et al.** Optimal Control of Parallel Hybrid Electric Vehicles. *IEEE Transactions on Control Systems Technology,* Mai 2004, vol. 12 (3
- **MUSARDO et al.** A-ECMS: An Adaptive Algorithm for Hybrid Electric Vehicle Energy Management. *European Journal of Control,* 2005, vol. 11, 509-524
- **HARRY HAMANN et al.** Development of an Energy Management Strategy for a Series-Parallel Hybrid Electric Vehicle. *12th symposium hybrid and electric vehicles,* 24. Februar 2015, ISBN 978-3-937655-35-2, 261-291